(19) Europäisches Patentamt
European Patent Office
Office européen des brevets

(11) EP 4 276 151 B1

(12) **EUROPEAN PATENT SPECIFICATION**

(45) Date of publication and mention of the grant of the patent:
**31.12.2025 Bulletin 2026/01**

(21) Application number: **22910623.2**

(22) Date of filing: **02.11.2022**

(51) International Patent Classification (IPC):
***C08L 83/04*** *(2006.01)* ***C08K 3/22*** *(2006.01)*
***C08K 3/28*** *(2006.01)*

(52) Cooperative Patent Classification (CPC):
(C-Sets available)
**C08L 83/04** (Cont.)

(86) International application number:
**PCT/JP2022/041047**

(87) International publication number:
**WO 2023/119903 (29.06.2023 Gazette 2023/26)**

# (54) HEAT CONDUCTING COMPOSITION AND CURE PRODUCT THEREOF

WÄRMELEITENDE ZUSAMMENSETZUNG UND HÄRTUNGSPRODUKT DAVON

COMPOSITION THERMOCONDUCTRICE ET PRODUIT DE DURCISSEMENT ASSOCIÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **23.12.2021 JP 2021209266**

(43) Date of publication of application:
**15.11.2023 Bulletin 2023/46**

(73) Proprietor: **Resonac Corporation**
**Tokyo (JP)**

(72) Inventors:
- **SATOH, Hikaru**
**Minato-ku,**
**Tokyo 1058518 (JP)**
- **FUNAHASHI, Hajime**
**Minato-ku,**
**Tokyo 1058518 (JP)**
- **YUKUTAKE, Hajime**
**Minato-ku,**
**Tokyo 1058518 (JP)**

(74) Representative: **Strehl & Partner mbB**
**Maximilianstrasse 54**
**80538 München (DE)**

(56) References cited:
**EP-A1- 0 823 451**
**EP-A1- 3 805 317**
**WO-A1-2018/016566**
**WO-A1-2020/262449**
**WO-A1-2021/109051**
**JP-A- 2000 109 373**
**JP-A- 2017 210 518**
**JP-A- 2020 090 584**
**JP-A- H1 149 958**
**JP-A- H10 110 179**
**JP-A- H11 307 700**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 276 151 B1

(52) Cooperative Patent Classification (CPC): (Cont.)

C-Sets
C08L 83/04, C08K 3/22, C08K 3/22, C08K 3/22,
C08K 3/28, C08K 5/56, C08L 83/00

## Description

Technical Field

The present invention relates to a heat conducting composition and a cured product thereof.

Background Art

In recent years, with the increase in performance and decrease in size of electronic devices and parts, the amount of heat generated from electronic devices and the like has increased, and ways to allow the heat to efficiently dissipate are being researched. In particular, to efficiently dissipate heat from a heat source to a heat sink, the heat conducting composition provided therebetween is required to have high thermal conductivity and insulating properties. In general, a heat conducting composition is composed of a matrix, such as a resin, filled with a powder that imparts thermal conductivity (thermally conductive powder). As the thermally conductive powder, a metal oxide such as alumina or a metal nitride such as aluminum nitride is used.

With the increase in the amount of produced heat and the decrease in size of the devices, there is a need to further improve the thermal conductivity of the heat conducting composition, which is addressed by increasing the filling amount of the thermally conductive powder.

For example, PTL1 discloses a thermally conductive polysiloxane composition that contains a thermally conductive filler and one or more selected from the group consisting of an alkoxysilyl group-containing compound and dimethylpolysiloxane, wherein the thermally conductive filler contains 20 to 100% by mass of aluminum nitride particles having a specific shape and having an average particle size of 50 μm or more and 150 μm or less and of aluminum nitride particles having a specific shape and having an average particle size of 10 μm or more and less than 50 μm, and a content ratio of the aluminum nitride particles having a specific shape and having an average particle size of 50 μm or more and 150 μm or less and the aluminum nitride particles having a specific shape and having an average particle size of 10 μm or more and less than 50 μm is 50:50 to 95:5 in terms of mass. Further, PTL2 discloses a thermally conductive silicone composition that contains an organopolysiloxane as a base polymer, and includes aluminum nitride having an average particle size of 10 to 100 μm and broken angular alumina having an average particle size of from 0.1 to 5 μm as a thermally conductive filler, which contains from 15 to 55% by mass of broken angular alumina based on the total amount of the aluminum nitride and the broken angular alumina, and contains a total amount of 60 to 95% by mass of the aluminum nitride and the broken angular alumina in the thermally conductive silicone composition. PTL3 discloses a thermally conductive polysiloxane composition that contains a thermally conductive filler and one or more selected from the group consisting of an alkoxysilyl group-containing compound and dimethylpolysiloxane, wherein the thermally conductive filler is composed of two or more kinds of thermally conductive fillers having different average particle sizes and contains 20% by mass or more of irregular aluminum nitride particles having an average particle size of 30 μm or more and 150 μm or less based on the total amount of the thermally conductive filler. In addition, PTL4 discloses a thermally conductive silicone composition that contains 6 to 40% by volume of an organopolysiloxane and 60 to 94% by volume of a thermally conductive filler, wherein the thermally conductive filler is composed of non-sintered broken angular aluminum nitride having an average particle size of 40 μm or more and in which a fine powder having a particle size of 5 μm or less is 1% by mass or less and a thermally conductive material having an average particle size of 1 μm or more other than the non-sintered broken angular aluminum nitride, and, and the thermally conductive material is 30 to 65% by volume.

PTL5 describes a high heat conductive silicone composition comprising a silicone component and a filler treating agent comprising an alkoxysilane compound and 90-98 wt.% of thermally conductive fillers comprising a blend of alumina and/or Al nitride particles having D50=70-150 μm, alumina and/or Al nitride particles having D50=30-45 μm, alumina particles having D50=1-5 μm and ZnO particles having D50=0.12 μm.

PTL6 describes a thermally conductive silicone composition comprising an organopolysiloxane comprising vinyl groups, an organopolysiloxane comprising SiH groups, an inorganic filler such as metal oxide or metal nitride having a diameter of less than 3μm and a thermally conductive filler having a diameter of more than 5 μm such as alumina, Al nitride or ZnO.

Finally, PTL7 relates to a thermally conductive silicone composition for use as a grease comprising an organopolysiloxane having a high viscosity, Si-Me and Si-Ph groups, aluminium nitride having a particle diameter of 0.5-11.0 μm and ZnO having a particle diameter.

Citation List

Patent Literature

PTL1: WO 2020/262449
PTL2: JP 2017-210518 A
PTL3: WO 2018/016566
PTL4: JP 2020-90584 A
PTL5: WO2021/109051
PTL6: EP 3 805 317
PTL7: EP 0 823 451

## Summary of Invention

### Technical Problem

However, when the amount of filler in the composition increases, there is a problem in that the viscosity of the composition increases and fluidity deteriorates. In addition, in the case of coating the heat conducting composition on a heat generating source or the like, workability deteriorates, and in some cases the target object may be damaged.
The present invention has been made to solve the subjects described above, and it is an object thereof to provide a heat conducting composition that achieves both a high heat conduction performance and good fluidity.

### Solution to Problem

The present inventors have made intensive studies to solve the above-described problems and therefore have found that the problems can be solved by the following invention.
That is, the present application relates to the following.

[1] A heat conducting composition comprising a curable silicone resin (A) and a thermally conductive powder (B), wherein

the thermally conductive powder (B) has a content of 70 to 98% by mass based on the total amount of the heat conducting composition,
the thermally conductive powder (B) contains, based on the total amount of the thermally conductive powder (B), 30 to 75% by mass of aluminum nitride particles (B-1) having a cumulative volume-based 50% particle size of 50 μm or more and 150 μm or less, 10 to 30% by mass of aluminum nitride particles (B-2) having a cumulative volume-based 50% particle size of 15 μm or more and less than 50 μm, 5 to 15% by mass of a metal oxide (B-3) other than zinc oxide having a cumulative volume-based 50% particle size of 1 μm or more and less than 20 μm, and 10 to 40% by mass of zinc oxide (B-4) having a cumulative volume-based 50% particle size of 0.1 μm or more and less than 1 μm and a BET specific surface area of less than 9.0 $m^2/g$, and
the metal oxide (B-3) other than zinc oxide and the zinc oxide (B-4) are both surface treated with at least one surface treatment agent selected from the group consisting of a silane coupling agent having an alkyl group having 10 to 22 carbon atoms and α-butyl-ω-(2-trimethoxysilylethyl)polydimethylsiloxane.

[2] The heat conducting composition according to the above [1], wherein the aluminum nitride particles (B-2) are non-sintered broken angular aluminum nitride particles.
[3] The heat conducting composition according to the above [1] or [2], wherein the metal oxide (B-3) other than zinc oxide is alumina.
[4] The heat conducting composition according to any of the above [1] to [3], wherein at least one kind of aluminum nitride particles selected from the group consisting of the aluminum nitride particles (B-1) and the aluminum nitride particles (B-2) has a silicon-containing oxide coating on a surface thereof.
[5] The heat conducting composition according to any of the above [1] to [4], wherein the curable silicone resin (A) is an addition reaction-curable silicone resin.
[6] The heat conducting composition according to the above [5], wherein the addition reaction-curable silicone resin is constituted from an organopolysiloxane (a-1) having an alkenyl group, an organopolysiloxane (a-2) having a hydrosilyl group, and a platinum group metal-based curing catalyst (a-3).
[7] The heat conducting composition according to any of the above [1] to [6], further comprising a dimethyl silicone oil (C).
[8] The heat conducting composition according to any of the above [1] to [7], which has a viscosity at 25°C of 50000 Pa·s or less.
[9] A cured product of the heat conducting composition according to any of the above [1] to [8]
[10] The cured product of the heat conducting composition according to the above [9], which has a thermal conductivity

of 10.0 W/m·K or more.

Advantageous Effects of Invention

According to the present invention, it is possible to provide a heat conducting composition that can achieve both a high thermal conduction performance and good fluidity.

Description of Embodiments

Hereinbelow, the present invention will be described in detail with reference to one embodiment.

<Heat conducting composition>

A heat conducting composition of the present embodiment comprises a curable silicone resin (A) and a thermally conductive powder (B), wherein

the thermally conductive powder (B) has a content of 70 to 98% by mass based on the total amount of the heat conducting composition,
the thermally conductive powder (B) contains, based on the total amount of the thermally conductive powder (B), 30 to 75% by mass of aluminum nitride particles (B-1) having a cumulative volume-based 50% particle size of 50 μm or more and 150 μm or less, 10 to 30% by mass of aluminum nitride particles (B-2) having a cumulative volume-based 50% particle size of 15 μm or more and less than 50 μm, 5 to 15% by mass of a metal oxide (B-3) other than zinc oxide having a cumulative volume-based 50% particle size of 1 μm or more and less than 20 μm, and 10 to 40% by mass of zinc oxide (B-4) having a cumulative volume-based 50% particle size of 0.1 μm or more and less than 1 μm and a BET specific surface area of less than 9.0 $m^2/g$, and
the metal oxide (B-3) other than zinc oxide and the zinc oxide (B-4) are both surface treated with at least one surface treatment agent selected from the group consisting of a silane coupling agent having an alkyl group having 10 to 22 carbon atoms and α-butyl-ω-(2-trimethoxysilylethyl)polydimethylsiloxane.

The heat conducting composition of the present embodiment can achieve both a high heat conduction performance and good fluidity by containing, as the thermally conductive powder (B), each of the aluminum nitride particles (B-1), the aluminum nitride particles (B-2), the metal oxide (B-3) other than zinc oxide, and the zinc oxide (B-4) in specific ratios.

[Curable silicone resin (A)]

The curable silicone resin (A) used in the present embodiment is a resin having an organopolysiloxane structure as a main chain, and is, for example, an addition reaction-curable silicone resin, a condensation reaction-curable silicone resin, an organic peroxide-curable silicone resin, or the like. Among them, an addition reaction-curable silicone resin is preferable from the viewpoint of enhancing the flexibility.

The addition reaction-curable silicone resin has a structure in which the functional groups in two types of organopolysiloxanes are bonded and crosslinked by an addition reaction. The addition reaction-curable silicone resin is constituted from, for example, an organopolysiloxane (a-1) having an alkenyl group as a base polymer, an organopolysiloxane (a-2) having a hydrosilyl group as a cross-linking agent, and a platinum group metal-based curing catalyst (a-3).

[Organopolysiloxane (a-1) having an alkenyl group]

Examples of the organopolysiloxane (a-1) having an alkenyl group include organopolysiloxanes having an alkenyl group bonded to two or more silicon atoms in one molecule (hereinafter also referred to as alkenyl group-containing organopolysiloxane).

The alkenyl group-containing organopolysiloxane preferably has 2 to 20, and more preferably 2 to 10, alkenyl groups bonded to silicon atoms in one molecule.

Generally, the alkenyl group-containing organopolysiloxane has a main chain composed mainly of repeating diorganosiloxane units, although it may contain a branched structure as a part of the molecule structure or be a cyclic structure. From the viewpoint of the mechanical strength of the cured product, a linear diorganopolysiloxane is preferable.

Examples of the alkenyl group bonded to silicon atoms include a vinyl group, an allyl group, a propenyl group, an isopropenyl group, a butenyl group, a hexenyl, and a cyclohexenyl group. Of these, from the viewpoint of reactivity with the organopolysiloxane (a-2) having a hydrosilyl group and availability, a lower alkenyl group such as a vinyl group and an allyl

group is preferable, and a vinyl group is particularly preferable.

The alkenyl groups bonded to silicon atoms may be present at the end of the molecular chain and/or at a non-terminal position of the molecular chain (i.e., a side chain of the molecular chain) in the molecule of the organopolysiloxane (a-1), but the alkenyl groups bonded to silicon atoms are preferably present at least at both ends of the molecular chain.

The organic groups bonded to the silicon atoms other than the alkenyl group are an unsubstituted or substituted monovalent hydrocarbon group optionally having an intervening oxygen atom. Examples thereof include alkyl groups such as a methyl group, an ethyl group, a propyl group, an isopropyl group, a butyl group, an isobutyl group, a tert-butyl group, a pentyl group, a neopentyl group, a hexyl group, a heptyl group, an octyl group, a nonyl group, a decyl group, and a dodecyl group; cycloalkyl groups such as a cyclopentyl group, a cyclohexyl group, and a cycloheptyl group; aryl groups such as a phenyl group, a tolyl group, a xylyl group, a naphthyl group, and a biphenylyl group; aralkyl groups such as a benzyl group, a phenylethyl group, a phenylpropyl group, and a methylbenzyl group; substituted groups of the foregoing groups in which a part or all of the hydrogen atoms bonded to a carbon atom are substituted by a halogen atom, such as fluorine, chlorine, or bromine, a cyano group, or the like, for example, a chloromethyl group, a 2-bromoethyl group, a 3-chloropropyl group, a 3,3,3-trifluoropropyl group, a chlorophenyl group, a fluorophenyl group, and a cyanoethyl group, and alkoxy groups such as a methoxy group, an ethoxy group, and a propoxy group. Representative examples of such organic groups have 1 to 10 carbon atoms, and in particular 1 to 6 carbon atoms. Preferably, such organic groups are unsubstituted or substituted alkyl groups having 1 to 3 carbon atoms, such as a methyl group, an ethyl group, a propyl group, a chloromethyl group, a bromoethyl group, a 3,3,3-trifluoropropyl group, and a cyanoethyl group, unsubstituted or substituted phenyl groups such as a phenyl group, a chlorophenyl group, and a fluorophenyl group, and alkoxy groups such as a methoxy group. The functional groups other than alkenyl group which are bonded to the silicon atoms are not required to all be the same.

The alkenyl group-containing organopolysiloxane (a-1) has a kinematic viscosity at 25°C of preferably from 10 to 100,000 $mm^2/s$, more preferably from 40 to 50,000 $mm^2/s$, further preferably from 50 to 10,000 $mm^2/s$, still further preferably from 60 to 5,000 $mm^2/s$, and still further preferably from 80 to 1,000 $mm^2/s$. When the kinematic viscosity is 10 $mm^2/s$ or more, the thermally conductive powder (B) can be highly filled, and when the kinematic viscosity is 100,000 $mm^2/s$ or less, an increase in the viscosity of the heat conducting composition can be suppressed.

In the present specification, the kinematic viscosity can be measured by an Ostwald viscometer, and specifically by the method described in the Examples.

[Organopolysiloxane (a-2) having a hydrosilyl group]

Examples of the organopolysiloxane (a-2) having a hydrosilyl group include an organohydrogenpolysiloxane having two or more hydrogen atoms directly bonded to silicon atoms. The organohydrogenpolysiloxane preferably has hydrogen atoms (Si-H groups) directly bonded to 2 to 100 silicon atoms in one molecule, and acts as a cross-linking agent of the alkenyl group-containing organopolysiloxane (a-1).

The organohydrogenpolysiloxane is preferably represented by the following general formula (I).

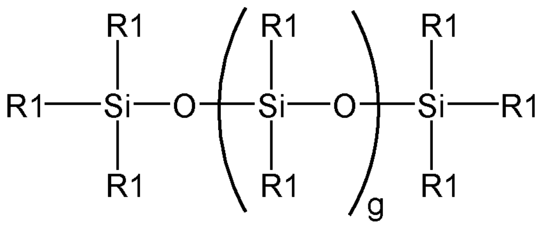

(I)

In the formula, R1 is each independently an unsubstituted or substituted monovalent hydrocarbon group containing no aliphatic unsaturated bonds or is a hydrogen atom. However, at least two R1 are hydrogen atoms, and g is an integer of 0 or more.

In the above formula (I), examples of the unsubstituted or substituted monovalent hydrocarbon group that does not contain an aliphatic unsaturated bond other than the hydrogen atom of R1 include alkyl groups such as a methyl group, an ethyl group, a propyl group, an isopropyl group, a butyl group, an isobutyl group, a tert-butyl group, a pentyl group, a neopentyl group, a hexyl group, a heptyl group, an octyl group, a nonyl group, a decyl group, and a dodecyl group; cycloalkyl groups such as a cyclopentyl group, a cyclohexyl group, and a cycloheptyl group; aryl groups such as a phenyl group, a tolyl group, a xylyl group, a naphthyl group, and a biphenylyl group; aralkyl groups such as a benzyl group, a phenylethyl group, a phenylpropyl group, and a methylbenzyl group; substituted groups of the foregoing groups in which a part or all of the hydrogen atoms bonded to a carbon atom are substituted by a halogen atom, such as fluorine, chlorine, or bromine, a cyano group, or the like, for example, a chloromethyl group, a 2-bromoethyl group, a 3-chloropropyl group, a 3,3,3-trifluoropropyl group, a chlorophenyl group, a fluorophenyl group, a cyanoethyl group, and a 3,3,4,4,5,5,6,6,6-nonafluorohexyl group. Of these, from the viewpoint of availability, unsubstituted or substituted alkyl groups having 1 to 3 carbon atoms, such as a methyl group, an ethyl group, a propyl group, a chloromethyl group, a bromoethyl group, a 3,3,3-trifluoropropyl group, and a cyanoethyl group, and unsubstituted or substituted phenyl groups such as a phenyl group, a chlorophenyl group, and a fluorophenyl group, are preferable. Further, the structure of each R1 other than the hydrogen atoms is not required to be the same for all R1.

Each R1 has at least two hydrogen atoms, preferably from 2 to 100 hydrogen atoms, and more preferably from 2 to 50 hydrogen atoms. The hydrogen atoms may be present at the end of the molecular chain and/or at a non-terminal position of the molecular chain (i.e., a side chain of the molecular chain).

The organohydrogenpolysiloxane has a kinematic viscosity at 25°C of preferably from 10 to 100,000 $mm^2/s$, more preferably from 15 to 10,000 $mm^2/s$, further preferably from 20 to 1,000 $mm^2/s$, and still further preferably from 25 to 500 $mm^2/s$. When the kinematic viscosity is 10 $mm^2/s$ or more, the thermally conductive powder (B) can be highly filled, and when the kinematic viscosity is 100,000 $mm^2/s$ or less, an increase in the viscosity of the heat conducting composition can be suppressed.

The molar amount of the hydrogen atoms directly bonded to silicon atoms in the organohydrogenpolysiloxane is preferably from 0.05 to 1.5 mol, more preferably from 0.08 to 1.3 mol, and further preferably from 0.1 to 1.0 mol based on 1 mol of the alkenyl groups bonded to silicon atoms in the alkenyl group-containing organopolysiloxane (a-1). When the molar amount of the hydrogen atoms is 0.05 mol or more, the cured product of the heat conducting composition does not become too soft and is easy to handle, and when the molar amount of the hydrogen atoms is 1.5 mol or less, the cured product of the heat conducting composition does not become too hard, has good adhesion to the heat dissipating object, and can have better thermal conductivity.

[Platinum group metal-based curing catalyst (a-3)]

The platinum group metal-based curing catalyst (a-3) promotes an addition reaction between the alkenyl groups in the alkenyl group-containing organopolysiloxane (a-1) and the Si-H groups in the organopolysiloxane (a-2) having a hydrosilyl group, and gives a three-dimensional network structure having a crosslinked structure.

Examples of the platinum group metal-based curing catalyst (a-3) include catalysts known as catalysts used in hydrosilylation reactions. Specific examples thereof include, for example, platinum group metal simple substances such as platinum (including platinum black), rhodium, and palladium; platinum chloride, chloroplatinic acid, and chloroplatinate such as $H_2PtCl_4 \cdot nH_2O$, $H_2PtCl_6 \cdot nH_2O$, $NaHPtCl_6 \cdot nH_2O$, $KaHPtCl_6 \cdot nH_2O$, $Na_2PtCl_6 \cdot nH_2O$, $K_2PtCl_4 \cdot nH_2O$, $PtCl_4 \cdot nH_2O$, $PtCl_2$, and $Na_2HPtCl_4 \cdot nH_2O$ wherein n is an integer of 0 to 6, and is preferably 0 or 6; alcohol-modified chloroplatinic acid (see the specification of US 3220972 B); complexes of chloroplatinic acid with olefin (see the specification of US 3159601 B, the specification of US 3159662 B, and the specification of US 3775452 B); catalyst obtained by supporting a platinum group metal such as platinum black or palladium on a carrier, such as alumina, silica, or carbon; rhodium-olefin complexes; chlorotris(triphenylphosphine)rhodium (Wilkinson catalyst); complexes of platinum chloride, chloroplatinic acid, or chloroplatinate with a vinyl group-containing siloxane, particularly a vinyl group-containing cyclic siloxane; and the like.

The amount of the platinum group metal-based curing catalyst (a-3) added is preferably from 0.1 to 1000 ppm, more preferably from 1 to 700 ppm, and further preferably from 5 to 500 ppm in terms of the mass of the platinum group metal element based on the total content of the alkenyl group-containing organopolysiloxane (a-1) and the organopolysiloxane (a-2) having a hydrosilyl group. When the amount of the platinum group metal-based curing catalyst (a-3) added is within this range, the addition reaction between the alkenyl groups in the alkenyl group-containing organopolysiloxane (a-1) and the Si-H groups in the organopolysiloxane (a-2) having a hydrosilyl group can be promoted.

A commercially available product can also be used as the addition reaction-curable silicone resin. Examples of commercially available products of the addition reaction-curable silicone resin include, for example, DOWSI (TM) EG-3100 (manufactured by Dow Toray Co., Ltd.).

[Addition reaction control agent (a-4)]

When an addition reaction-curable silicone resin is used as the curable silicone resin (A), the heat conducting composition of the present embodiment may further contain an addition reaction control agent (a-4). As the addition reaction control agent (a-4), known addition reaction control agents used for usual addition reaction-curable silicone resins can be used. Examples thereof include acetylene compounds such as 1-ethynyl-1-hexanol and 3-butyn-1-ol, various nitrogen compounds, organic phosphorus compounds, oxime compounds, and organic chloro compounds.

The amount of the addition reaction control agent (a-4) added is, from the viewpoint of ensuring a working time during use, preferably from 0.001 to 5% by mass, more preferably from 0.005 to 4% by mass, and further preferably from 0.01 to 3% by mass based on the total content of the alkenyl group-containing organopolysiloxane (a-1) and the organopolysiloxane (a-2) having a hydrosilyl group.

The content of the curable silicone resin (A) is preferably from 1.0 to 30% by mass, more preferably from 1.5 to

20% by mass, and further preferably from 2.0 to 10% by mass based on the total amount of the heat conducting composition. When the content of the curable silicone resin (A) is 1.0% by mass or more, the viscosity of the heat conducting composition does not become too high and workability is good, and when the content of the curable silicone resin (A) is 30% by mass or less, the heat conductivity of the composition is improved.

[Thermally conductive powder (B)]

The thermally conductive powder (B) used in the present embodiment contains, based on the total amount of the thermally conductive powder (B), 30 to 75% by mass of aluminum nitride particles (B-1) having a cumulative volume-based 50% particle size of 50 μm or more and 150 μm or less, 10 to 30% by mass of aluminum nitride particles (B-2) having a cumulative volume-based 50% particle size of 15 μm or more and less than 50 μm, 5 to 15% by mass of a metal oxide (B-3) other than zinc oxide having a cumulative volume-based 50% particle size of 1 μm or more and less than 20 μm, and 10 to 40% by mass of zinc oxide (B-4) having a cumulative volume-based 50% particle size of 0.1 μm or more and less than 1 μm and a BET specific surface area of less than 9.0 $m^2/g$. Further, the metal oxide (B-3) other than zinc oxide and the zinc oxide (B-4) are both surface treated with at least one surface treatment agent selected from the group consisting of a silane coupling agent having an alkyl group having 10 to 22 carbon atoms and α-butyl-ω-(2-trimethoxysilylethyl)polydimethylsiloxane.

When the thermally conductive powder (B) contains the aluminum nitride particles (B-1), the aluminum nitride particles (B-2), the metal oxide (B-3) other than zinc oxide, and the zinc oxide (B-4) within this ranges, it is possible to achieve both a high heat conduction performance and good fluidity.

[Aluminum nitride particles (B-1)]

The aluminum nitride particles (B-1) used in the present embodiment have a cumulative volume-based 50% particle size of 50 μm or more and 150 μm or less, preferably 55 μm or more and 140 μm or less, more preferably 60 μm or more and 130 μm or less, and further preferably 60 μm or more and 100 μm or less, and still further preferably 60 μm or more and 80 μm or less. When the cumulative volume-based 50% particle size of the aluminum nitride particles (B-1) is within this range, the fluidity of the heat conducting composition becomes good, and high thermal conductivity can be obtained.

The cumulative volume-based 50% particle size (hereinafter sometimes referred to as "D50") herein can be determined from the particle size at which the cumulative volume is 50% in a particle size distribution measured using a laser diffraction particle size distribution analyzer.

The aluminum nitride particles (B-1) are not particularly limited as long as they satisfy the above-described cumulative volume-based 50% particle size, and known products such as commercially available products can be used. The aluminum nitride particles (B-1) may be obtained by any production method, and may be obtained, for example, by a direct nitriding method in which metallic aluminum powder and nitrogen or ammonia are directly reacted, or by a reduction nitridation method in which a nitriding reaction is performed at the same time as heating alumina in a nitrogen or ammonia atmosphere while reducing with carbon.

The aluminum nitride particles (B-1) may be a sintered body or a non-sintered body, and from the viewpoint of high filling properties, a sintered body is preferable. The shape is not particularly limited, and examples thereof include irregular (broken angular), spherical, elliptical, and plate-like (scale-like). Among them, a spherical shape is preferable from the viewpoint of ensuring the fluidity of the heat conducting composition.

Here, the term "sintered body" refers to a body obtained by adding a sintering aid or a particle size control agent to an aluminum nitride particle powder, sintering at a high temperature, and then pulverizing or classifying the powder, and the term "non-sintered body" refers to a body synthesized using a process such as direct nitridation, reduction nitridation, and a vapor phase method. In addition, "spherical" refers to a particle state that is a true sphere or has a rounded shape substantially without corners, and "broken angular" refers to a particle state having an arbitrary shape with the corners that broken angular particles have. These shapes can be confirmed by an electron microscope or other microscope.

The BET specific surface area of the aluminum nitride particles (B-1) is preferably from 0.01 to 1.0 $m^2/g$, more preferably from 0.02 to 0.8 $m^2/g$, and further preferably from 0.03 to 0.5 $m^2/g$ from the viewpoint of filling properties into the curable silicone resin (A).

The BET specific surface area can herein be measured from the nitrogen adsorption BET single-point method by the gas flow method, and specifically by the method described in the Examples.

The content of the aluminum nitride particles (B-1) is from 30 to 75% by mass, preferably from 32 to 60% by mass, and more preferably from 35 to 55% by mass based on the total amount of the thermally conductive powder (B). When the content of the aluminum nitride particles (B-1) is 30% by mass or more, the thermal conductivity can be enhanced, and when the content is 75% by mass or less, the fluidity and ease of handling of the heat conducting composition can be ensured.

[Aluminum nitride particles (B-2)]

The aluminum nitride particles (B-2) used in the present embodiment have a cumulative volume-based 50% particle size of 15 μm or more and less than 50 μm, preferably 17 μm or more and 45 μm or less, more preferably 20 μm or more and 40 μm or less, and further preferably 30 μm or more and 40 μm or less. When the cumulative volume-based 50% particle size of the aluminum nitride particles (B-2) is within this range, it is possible for the composition to have both a high heat conduction performance and good fluidity.

The aluminum nitride particles (B-2) are not particularly limited as long as they satisfy the above-described cumulative volume-based 50% particle size, and may be a sintered body or a non-sintered body. The aluminum nitride particles (B-2) are preferably non-sintered broken angular aluminum nitride particles from the viewpoint of high thermal conductivity.

The BET specific surface area of the aluminum nitride particles (B-2) is preferably 0.01 to 1.0 $m^2/g$, more preferably 0.03 to 0.8 $m^2/g$, and further preferably 0.05 to 0.5 $m^2/g$ from the viewpoint of filling properties into the curable silicone resin (A).

The method for measuring the BET specific surface area of the aluminum nitride particles (B-2) is as described for the aluminum nitride particles (B-1).

The content of the aluminum nitride particles (B-2) is from 10 to 30% by mass, preferably from 10 to 25% by mass, and more preferably from 15 to 20% by mass based on the total amount of the thermally conductive powder (B). When the content of the aluminum nitride particles (B-2) is 10% by mass or more, the thermal conductivity can be enhanced, and when the content is 30% by mass or less, the fluidity and ease of handling of the heat conducting composition can be ensured.

(Formation of silicon-containing oxide coating)

From the viewpoint of improved moisture resistance, the at least one kind of aluminum nitride particles selected from the group consisting of the aluminum nitride particles (B-1) and the aluminum nitride particles (B-2) preferably has a silicon-containing oxide coating on a surface thereof. The silicon-containing oxide coating may cover partially or the entire surface of the aluminum nitride particles, and preferably covers the entire surface of the aluminum nitride particles.

Since aluminum nitride particles have excellent thermal conductivity, the aluminum nitride particles having a silicon-containing oxide coating on their surface (hereinafter also referred to as silicon-containing oxide-coated aluminum nitride particles) also have excellent thermal conductivity.

Examples of the "silicon-containing oxide" for the silicon-containing oxide coating and silicon-containing oxide-coated aluminum nitride particles include silica and oxides including silicon and aluminum.

In the silicon-containing oxide-coated aluminum nitride particles, the coverage of the silicon-containing oxide coating that covers the surface of the aluminum nitride particles as determined by LEIS analysis is preferably from 70% or more and 100% or less, more preferably 70% or more and 95% or less, further preferably 72% or more and 90% or less, particularly preferably 74% or more and 85% or less. When the coverage is 70% or more and 100% or less, the moisture resistance is more excellent. When the coverage exceeds 95%, the thermal conductivity may decrease.

The coverage (%) determined by LEIS (Low Energy Ion Scattering) analysis of the silicon-containing oxide coating ($SiO_2$) that covers the surface of the aluminum nitride particles can be determined by the following formula:

$$(S_{Al}(AlN) - S_{Al}(AlN + SiO_2))/S_{Al}(AlN) \times 100$$

In the formula, $S_{Al}(AlN)$ is the area of the Al peak of the aluminum nitride particles, and $S_{Al}(AlN + SiO_2)$ is the area of the Al peak of the silicon-containing oxide-coated aluminum nitride particles. The area of the Al peak can be determined from analysis by means of low energy ion scattering (LEIS) which is a measurement method using an ion source and a noble gas as probes. LEIS is a technique using a noble gas of several keV as the incident ion, being an evaluation method permitting a composition analysis of the outermost surface (reference: The TRC News 201610-04 (October 2016)).

An example of a method for forming a silicon-containing oxide coating on the surface of aluminum nitride particles includes a method having a first step of covering the surface of the aluminum nitride particles with a siloxane compound having a structure represented by the following formula (1), and a second step of heating the aluminum nitride particles covered with the siloxane compound at a temperature of 300°C or more and 900°C or less.

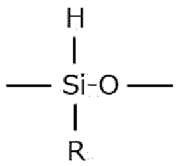

· · · (1)

In the formula (1), R is an alkyl group having 4 or less carbon atoms.

The structure represented by the formula (1) is a hydrogen siloxane structural unit having a Si-H bond. In the formula (1), R is an alkyl group having 4 or less carbon atoms, that is, a methyl group, an ethyl group, a propyl group, or a butyl group, preferably a methyl group, an ethyl group, an isopropyl group, or a t-butyl group, more preferably a methyl group.

As the siloxane compound, preferable is an oligomer or a polymer including a structure represented by the formula (1) as a repeating unit. The siloxane compound may be any of linear, branched, or cyclic. The weight average molecular weight of the siloxane compound is preferably from 100 to 2000, more preferably from 150 to 1000, further preferably from 180 to 500, from the viewpoint of ease of formation of a silicon-containing oxide coating having a uniform coating thickness. The weight average molecular weight is a value in terms of polystyrene, obtained by gel permeation chromatography (GPC).

As the siloxane compound, preferably used are/is a compound represented by the following formula (2) and/or a compound represented by the following formula (3).

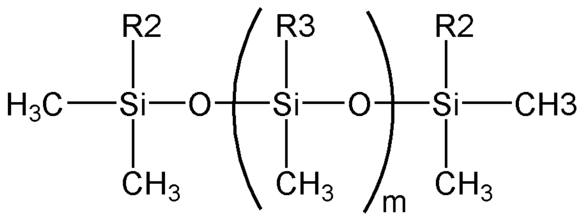

· · · (2)

In the formula (2), R2 and R3 are each independently a hydrogen atom or a methyl group, and at least either of R2 and R3 is a hydrogen atom. m is an integer of 0 to 10, and is preferably 1 to 5, more preferably 1.

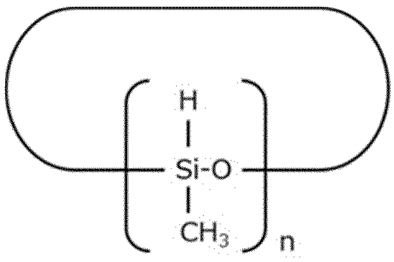

· · · (3)

In the formula (3), n is an integer of 3 to 6, preferably from 3 to 5, more preferably 4.

As the siloxane compound, particularly preferable is a cyclic hydrogen siloxane oligomer in which n is 4 in the formula (3), from the viewpoint of ease of formation of a favorable silicon-containing oxide coating.

In the first step, the surface of the aluminum nitride particles is covered with a siloxane compound having a structure represented by the formula (1).

In the first step, as long as the surface of the aluminum nitride particles can be covered with a siloxane compound having a structure represented by the formula (1), the process is not particularly limited. Examples of the process for the first step include a dry mixing method in which, using a common powder mixing apparatus, dry mixing is carried out by adding the siloxane compound by spraying while the raw material aluminum nitride particles are stirred to thereby coat the aluminum nitride particles.

Examples of the powder mixing apparatus include a Henschel mixer (manufactured by Nippon Coke & Engineering Co., Ltd.), a rotary vessel-type V blender, a ribbon blender having mixing blades such as a double cone-type blender, a screw-type blender, a hermetic rotary kiln, and stirring by means of a stirring bar of a hermetic container using magnet coupling. The temperature conditions are not particularly limited, and are preferably 10°C or more and 200°C or less, more preferably 20°C or more and 150°C or less, and further preferably 40°C or more and 100°C or less.

A vapor phase adsorption method also may be used in which vapor of the siloxane compound singly or a mixed gas thereof with an inert gas such as nitrogen gas is caused to be attached or deposited onto the surface of the aluminum

nitride particles which have been left to stand. The temperature conditions are not particularly limited, and are preferably 10°C or more and 200°C or less, more preferably 20°C or more and 150°C or less, further preferably 40°C or more and 100°C or less. If further necessary, the inside of the system may be pressurized or depressurized. As an apparatus that can be used in this case, preferable is an apparatus which is a hermetic system and in which the gas in the system can be easily replaced. Examples thereof that can be used include a glass container, a desiccator, and a CVD apparatus.

The amount of the siloxane compound used in the first step is not particularly limited. In the aluminum nitride particles covered with the siloxane compound obtained in the first step, the amount coated with the siloxane compound is preferably 0.1 mg or more and 1.0 mg or less, more preferably 0.2 mg or more and 0.8 mg or less, further preferably 0.3 mg or more and 0.6 mg or less per 1 $m^2$ of the surface area calculated from the specific surface area ($m^2/g$) of the aluminum nitride particles determined by the BET method. When the amount coated with the siloxane compound is within this range, it is possible to obtain aluminum nitride particles having a silicon-containing oxide coating having a uniform coating thickness.

The amount coated with the siloxane compound per 1 $m^2$ of the surface area calculated from the specific surface area ($m^2/g$) of the aluminum nitride particles determined by the BET method can be determined by dividing the difference between the masses of the aluminum nitride particles before and after coated with the siloxane compound by the surface area ($m^2$) calculated from the specific surface area ($m^2/g$) of the aluminum nitride particles determined by the BET method.

In the second step, the aluminum nitride particles coated with the siloxane compound obtained in the first step is heated at a temperature of 300°C or more and 800°C or less. This enables the silicon-containing oxide coating to be formed on the surface of the aluminum nitride particles. The heating temperature is more preferably 400°C or more, further preferably 500°C or more.

From the viewpoint that a sufficient reaction time is secured and also a favorable silicon-containing oxide coating is efficiently formed, the heating time is preferably 30 minutes or more and 6 hours or less, more preferably 45 minutes or more and 4 hours or less, further preferably 1 hour or more and 2 hours or less.

As for the atmosphere at the time of heating treatment, the heating treatment is preferably performed in an atmosphere including oxygen gas, for example, in the atmospheric air (in the air).

The particles of the silicon-containing oxide-coated aluminum nitride may be partially fused to one another after the heat treatment in the second step, and in such a case, disintegration using a common pulverizer, for example, a roller mill, a hammer mill, a jet mill, and a ball mill enables silicon-containing oxide-coated aluminum nitride particles without adhesion or aggregation to be obtained.

After completion of the second step, the first step and the second step may be performed in the order mentioned. That is, a step of performing the first step and the second step in the order mentioned may be repeatedly performed.

[Metal oxide (B-3) other than zinc oxide]

The metal oxide (B-3) other than zinc oxide used in the present embodiment has a cumulative volume-based 50% particle size of 1 μm or more and less than 20 μm, preferably 2 μm or more and 15 μm or less, more preferably 3 μm or more and 10 μm or less, and further preferably 3 μm or more and 6 μm or less. When the cumulative volume-based 50% particle size of the metal oxide (B-3) other than zinc oxide is within this range, the fluidity and ease of handling of the heat conducting composition can be ensured.

The metal oxide (B-3) other than zinc oxide is surface treated with at least one surface treatment agent selected from the group consisting of a silane coupling agent having an alkyl group having 10 to 22 carbon atoms (hereinafter simply referred to as silane coupling agent) and α-butyl-ω-(2-trimethoxysilylethyl)polydimethylsiloxane. The alkyl group of the silane coupling agent preferably has 12 to 20 carbon atoms, and more preferably 16 to 18 carbon atoms.

By surface-treating the metal oxide (B-3) other than zinc oxide with the surface treatment agent, the fluidity of the heat conducting composition and the filling properties of the thermally conductive powder can be enhanced.

Examples of the silane coupling agent include decyltrimethoxysilane, dodecyltrimethoxysilane, tetradecyltrimethoxysilane, hexadecyltrimethoxysilane, heptadecyltrimethoxysilane, octadecyltrimethoxysilane, and icosyltrimethoxysilane. Among them, from the viewpoint of enhancing the fluidity of the heat conducting composition, decyltrimethoxysilane, hexadecyltrimethoxysilane, and octadecyltrimethoxysilane are preferable, and hexadecyltrimethoxysilane is more preferable.

The silane coupling agent may be used alone or in combination of two or more.

In the α-butyl-ω-(2-trimethoxysilylethyl)polydimethylsiloxane, the number of repeating units of dimethylsiloxane is an integer of from 5 to 200, preferably from 10 to 100, and more preferably from 12 to 50. When the number of repeating units of dimethylsiloxane is 5 or more, the fluidity of the heat conducting composition becomes good, and when it is 200 or less, the viscosity of the α-butyl-ω-(2-trimethoxysilylethyl)polydimethylsiloxane does not become too high, and the fluidity of the heat conducting composition becomes good. In addition, the solubility in a solvent is improved when surface treating the metal oxide (B-3) other than zinc oxide and the zinc oxide (B-4) which is described later, and adjustment of the hydrolysis solution becomes easy.

The amount of the silane coupling agent and the α-butyl-ω-(2-trimethoxysilylethyl)polydimethylsiloxane used is each preferably from 0.1 to 10% by mass, more preferably from 0.2 to 8% by mass, and further preferably from 0.2 to 6% by mass based on the total amount of the metal oxide (B-3) other than zinc oxide. By using the silane coupling agent and the α-butyl-ω-(2-trimethoxysilylethyl)polydimethylsiloxane each within this range, the surface treatment of the metal oxide (B-3) other than zinc oxide can be sufficiently performed.

Examples of the surface treatment method for the metal oxide (B-3) other than zinc oxide with the silane coupling agent or α-butyl-ω-(2-trimethoxysilylethyl)polydimethylsiloxane include a dry method, a wet method, and an integral blend method, and any of the methods can be used. The dry method is a method in which a predetermined amount of silane coupling agent or α-butyl-ω-(2-trimethoxysilylethyl)polydimethylsiloxane, as is or in the form of a solution diluted with an organic solvent, is mechanically mixed while spraying or dropping into the metal oxide (B-3) other than zinc oxide, and then the mixture is dried and the silane coupling agent or α-butyl-ω-(2-trimethoxysilylethyl)polydimethylsiloxane is baked as required. The wet method is a method in which the metal oxide (B-3) other than zinc oxide is impregnated with a solution obtained by diluting a predetermined amount of the silane coupling agent or α-butyl-ω-(2-trimethoxysilylethyl)polydimethylsiloxane with an organic solvent and subjected to stirring and mixing to volatilize the solvent. The integral blend method is a method in which a predetermined amount of the silane coupling agent or α-butyl-ω-(2-trimethoxysilylethyl) polydimethylsiloxane is added while the curable silicone resin (A) and the metal oxide (B-3) other than zinc oxide are mixed. Generally in the integral blend method, in view of reactivity with the metal oxide (B-3) other than zinc oxide, a relatively large amount of the silane coupling agent or α-butyl-ω-(2-trimethoxysilylethyl)polydimethylsiloxane is often used in the preferable range described above, and further, the mixing is often performed under heating.

Examples of a surface treatment apparatus include a rotation-revolution stirring mixer, a blender, a Nauta mixer, a Henschel mixer, and a planetary mixer, and any of these may be used.

In the surface treatment with silane coupling agent or α-butyl-ω-(2-trimethoxysilylethyl)polydimethylsiloxane of the metal oxide (B-3) other than zinc oxide, after mixing, it is preferable to perform a heat treatment at a temperature of 100 to 170°C for 1 to 12 hours, is more preferable to perform a heat treatment at a temperature of 110 to 150°C for 1 to 8 hours, and is further preferable to perform a heat treatment at a temperature of 110 to 130°C for 2 to 4 hours.

The metal oxide (B-3) other than zinc oxide is not particularly limited as long as it is surface-treated with the aforementioned surface treatment agent and satisfies the cumulative volume-based 50% particle size, and examples thereof include alumina (aluminum oxide), magnesium oxide, silicon dioxide, and iron oxide. Among them, alumina is preferable from the viewpoint of high thermal conductivity.

Alumina has thermal conductivity and excellent moisture resistance. The alumina is preferably α-alumina (α-$Al_2O_3$). In addition to α-alumina, γ-alumina, θ-alumina, δ-alumina, and the like may be contained.

As the alumina, known alumina, such as a commercially available product, can be used.

The alumina may be produced by any method, for example, thermal decomposition of ammonium alum, thermal decomposition of ammonium aluminum carbonate, underwater spark discharge of aluminum, vapor phase oxidation, hydrolysis of aluminum alkoxide, or the like.

The shape of the alumina is not particularly limited, and examples thereof include irregular (broken angular), spherical, rounded, and polyhedral.

The BET specific surface area of the metal oxide (B-3) other than zinc oxide is preferably from 0.05 to 2.0 $m^2/g$, more preferably from 0.1 to 1.5 $m^2/g$, and further preferably from 0.2 to 1.0 $m^2/g$ from the viewpoint of filling properties into the curable silicone resin (A).

The method for measuring the BET specific surface area of the metal oxide (B-3) other than zinc oxide is as described for the aluminum nitride particles (B-1).

The content of the metal oxide (B-3) other than zinc oxide is from 5 to 15% by mass, preferably from 6 to 15% by mass, and more preferably from 8% to 14% by mass based on the total amount of the thermally conductive powder (B). When the content of the metal oxide (B-3) other than zinc oxide is within this range, the fluidity and ease of handling of the heat conducting composition can be ensured.

[Zinc oxide (B-4)]

The zinc oxide (B-4) used in the present embodiment has a cumulative volume-based 50% particle size of 0.1 μm or more and less than 1 μm, and a BET specific surface area of less than 9.0 $m^2/g$.

When the cumulative volume-based 50% particle size of the zinc oxide (B-4) is within this range, the fluidity and ease of handling of the heat conducting composition can be ensured. From such a viewpoint, the cumulative volume-based 50% particle size of the zinc oxide (B-4) is preferably 0.2 μm or more and 0.9 μm or less, and more preferably 0.3 μm or more and 0.8 μm or less.

When the zinc oxide (B-4) has a BET specific surface area of less than 9.0 $m^2/g$, the viscosity of the heat conducting composition can be reduced. From such a viewpoint, the BET specific surface area of the zinc oxide (B-4) is preferably 8.0 $m^2/g$ or less, more preferably 7.0 $m^2/g$ or less, further preferably 6.0 $m^2/g$ or less, still further preferably 5.8

$m^2/g$ or less, and still further preferably 5.5 $m^2/g$ or less. Although the lower limit of the BET specific surface area of the zinc oxide (B-4) is not particularly limited, it is preferably 1.0 $m^2/g$ or more.

The method for measuring the BET specific surface area of the zinc oxide (B-4) is as described for the aluminum nitride particles (B-1), and specifically, it can be measured by the method described in the Examples.

The zinc oxide (B-4) is surface-treated with at least one surface treatment agent selected from the group consisting of a silane coupling agent having an alkyl group having 10 to 22 carbon atoms and α-butyl-ω-(2-trimethoxysilylethyl)polydimethylsiloxane. By surface-treating the zinc oxide (B-4) with a surface treatment agent, the fluidity of the heat conducting composition can be enhanced.

The preferable number of carbon atoms in the alkyl group of the silane coupling agent is as described for the metal oxide (B-3) other than zinc oxide.

As the silane coupling agent or α-butyl-ω-(2-trimethoxysilylethyl)polydimethylsiloxane, the examples described for the metal oxide (B-3) other than zinc oxide can be used. Further, examples of the surface treatment method of the zinc oxide (B-4) with a silane coupling agent or α-butyl-ω-(2-trimethoxysilylethyl)polydimethylsiloxane include the method described for the metal oxide (B-3) other than zinc oxide.

The amount of the silane coupling agent and α-butyl-ω-(2-trimethoxysilylethyl)polydimethylsiloxane used is preferably from 0.1 to 10% by mass, more preferably from 0.2 to 8% by mass, and further preferably from 0.2 to 6% by mass based on the total amount of the zinc oxide (B-4). By using the silane coupling agent and α-butyl-ω-(2-trimethoxysilylethyl) polydimethylsiloxane within this range, the surface treatment of the zinc oxide (B-4) can be sufficiently performed.

The content of the zinc oxide (B-4) is from 10 to 40% by mass, preferably from 15 to 38% by mass, and more preferably from 20 to 35% by mass based on the total amount of the thermally conductive powder (B). When the content of the zinc oxide (B-4) is 10% by mass or more, the fluidity of the heat conducting composition can be enhanced, and when the content is 40% by mass or less, a decrease in thermal conductivity can be suppressed.

The thermally conductive powder (B) may contain a thermally conductive powder (b) which is different from the aluminum nitride particles (B-1), the aluminum nitride particles (B-2), the metal oxide (B-3) other than zinc oxide, and the zinc oxide (B-4).

Examples of the thermally conductive powder (b) include metal oxides (excluding the metal oxide (B-3) other than zinc oxide and the zinc oxide (B-4)), metal nitrides (excluding the aluminum nitride particles (B-1) and the aluminum nitride particles (B-2)), and metal hydroxides.

Examples of metal nitrides include boron nitride, aluminum nitride, and silicon nitride. Examples of metal oxides include zinc oxide, alumina, magnesium oxide, silicon dioxide, and iron oxide. Examples of metal hydroxides include aluminum hydroxide and magnesium hydroxide.

When the thermally conductive powder (B) contains the thermally conductive powder (b), the content of the thermally conductive powder (b) is preferably 30% by mass or less, more preferably 20% by mass or less, and further preferably 10% by mass or less based on the total amount of the thermally conductive powder (B).

The content of the thermally conductive powder (B) is from 70 to 98% by mass, preferably from 80 to 98% by mass, more preferably from 85 to 98% by mass, further preferably from 90 to 98% by mass, and still further preferably 95 to 97% by mass based on the total amount of the heat conducting composition. When the content of the thermally conductive powder (B) is 70% by mass or more, a sufficient heat conduction performance can be ensured, and when the content is 98% by mass or less, the heat conducting composition has good fluidity and can be easily discharged.

[Dimethyl silicone oil (C)]

The heat conducting composition of the present embodiment preferably further contains a dimethyl silicone oil (C) from the viewpoint of further reducing the viscosity of the heat conducting composition.

The dimethyl silicone oil (C) is an organopolysiloxane that does not have a curable functional group, and is a non-reactive silicone oil.

The dimethyl silicone oil (C) has a kinematic viscosity at 25°C preferably from 10 to 100,000 $mm^2/s$, more preferably from 20 to 10,000 $mm^2/s$, further preferably from 30 to 1,000 $mm^2/s$, still further preferably from 40 to 500 $mm^2/s$, and still further preferably from 40 to 200 $mm^2/s$. When the kinematic viscosity is 10 $mm^2/s$ or more, the thermally conductive powder (B) can be highly filled, and when the kinematic viscosity is 100,000 $mm^2/s$ or less, an increase in the viscosity of the heat conducting composition can be suppressed. As described above, the kinematic viscosity can be measured by an Ostwald viscometer.

The dimethyl silicone oil (C) can be obtained as a commercial product, for example, KF-96-100cs (kinematic viscosity at 25°C = 100 $mm^2/s$) (manufactured by Shin-Etsu Chemical Co., Ltd.), TSF-458-50 (kinematic viscosity at 25°C = 50 $mm^2/s$), ELEMENT14PDMS100-J (kinematic viscosity at 25°C = 100 $mm^2/s$) (both manufactured by Momentive Performance Materials Japan GK), or the like.

The content of the dimethyl silicone oil (C) is preferably from 0.1 to 2.0% by mass, more preferably from 0.2 to 1.8% by mass, and further preferably from 0.3 to 1.5% by mass based on the total amount of the heat conducting

composition. When the content of the dimethyl silicone oil (C) is 0.1% by mass or more, the viscosity of the heat conducting composition can be further reduced, and when the content is 2.0% by mass or less, bleeding of the dimethyl silicone oil can be suppressed.

In addition to the above components, the heat conducting composition of the present embodiment can optionally contain additives such as a flexibility imparting agent, an inorganic ion scavenger, a pigment, a dye, and a diluent within a range that does not impair the effects of the present invention, as necessary.

In the heat conducting composition of the present embodiment, the total content of the curable silicone resin (A) and the thermally conductive powder (B) is preferably 85% by mass or more, more preferably 90% by mass, and further preferably 95% by mass or more, from the viewpoint of enhancing the thermal conductivity.

The heat conducting composition of the present embodiment can be obtained by supplying the curable silicone resin (A), the thermally conductive powder (B), and the optionally-added addition reaction control agent (a-4), dimethyl silicone oil (C), and various additives, to a dispersing/dissolving apparatus in one go or split into several batches, and mixing, dissolving, and kneading while heating as necessary. Examples of the dispersing/dissolving apparatus include a mortar machine, a planetary mixer, a rotation/revolution mixer, a kneader, and a roll mill.

The heat conducting composition of the present embodiment preferably has a viscosity at 25°C of 50,000 Pa·s or less, more preferably 45,000 Pa·s or less, and further preferably 40,000 Pa·s or less. The lower limit value of the viscosity is preferably 50 Pa·s or more, more preferably 100 Pa·s or more, and further preferably 150 Pa·s or more.

The viscosity can be measured by a method conforming to JIS K7210:2014 using a flow viscometer, and specifically by the method described in the Examples.

Examples of the method for curing the heat conducting composition of the present embodiment include a method of coating the composition on an adherend that requires heat dissipation and then leaving the composition at room temperature (23°C) or heating at a predetermined temperature.

The heating is preferably performed under the conditions of a temperature of 50°C to 150°C for 5 minutes to 10 hours, and more preferably under the conditions of a temperature of 60°C to 130°C for 10 minutes to 5 hours. From the viewpoint of rapid curing, it is preferable to employ a heating method.

The cured product of the heat conducting composition of the present embodiment preferably has a thermal conductivity of 10.0 W/m·K or more, and more preferably 10.5 W/m·K or more.

The thermal conductivity can be measured by a method conforming to ISO22007-2, and specifically by the method described in the Examples.

The cured product of the heat conducting composition of the present embodiment preferably has a C hardness measured according to the hardness test (type C) of JIS K7312:1996 of from 15 to 95, more preferably from 18 to 90, further preferably from 20 to 85, and still further preferably from 20 to 80. When the C hardness is within this range, the cured product can have an appropriate hardness.

The C hardness can be specifically measured by the method described in the Examples.

Since the heat conducting composition of the present embodiment can achieve both a high heat conduction performance and good fluidity, it can be suitably used in a heat dissipating sheet, heat dissipating gel, or heat dissipating grease provided between a heat source and a heat sink in an electronic device, and in a heat dissipating member in an adhesive and the like.

[Examples]

The present invention will now be described in detail with reference to examples, but the present invention is not limited by these examples.

[Synthesis Example 1: Preparation of silicon-containing oxide-coated aluminum nitride particles (B-1)]

In a first step, surface coating of aluminum nitride particles was performed using a vacuum desiccator that was made of an acrylic resin having a plate thickness of 20 mm, had inner dimensions of 260 mm × 260 mm × 100 mm, and had a structure having two, upper and lower, stages divided by a partition having through holes. 200 g of spherical sintered body aluminum nitride particles (FAN-f80-A1 manufactured by Furukawa Denshi Co., Ltd., D50 = 76 μm, BET specific surface area = 0.05 $m^2$/g) uniformly spread on a stainless tray were left to stand on the upper stage of the vacuum desiccator. Next, on the lower stage of the vacuum desiccator, 20 g of a siloxane compound in which n = 4 in formula (3) (cyclic methylhydrogensiloxane tetramer: manufactured by Tokyo Chemical Industry Co., Ltd.) was placed in a glass petri dish and left to stand. Thereafter, the vacuum desiccator was closed and heated in an oven at 80°C for 8 hours. The operation was performed with safety measures taken, such as release of hydrogen gas generated by the reaction from the open valve attached to the vacuum desiccator. After the first step finished, the sample was taken out of the desiccator, placed in an alumina crucible, and a second step of heat-treating in atmospheric air under conditions of 850°C and 6 hours was performed to obtain silicon-containing oxide-coated aluminum nitride particles (B-1).

[Synthesis Example 2: Preparation of silicon-containing oxide-coated aluminum nitride particles (B-2a)]

Silicon-containing oxide-coated aluminum nitride particles (B-2a) were obtained in the same manner as in Synthesis Example 1, except that in the first step, 100 g of spherical sintered body aluminum nitride particles (FAN-f30-A1 manufactured by Furukawa Denshi Co., Ltd., D50 = 34 μm, BET specific surface area = 0.12 $m^2/g$) was used instead of FAN-f80-A1.

[Synthesis Example 3: Preparation of silicon-containing oxide-coated aluminum nitride particles (B-2b)]

Silicon-containing oxide-coated aluminum nitride particles (B-2b) were obtained in the same manner as in Synthesis Example 1, except that in the first step, 100 g of non-sintered broken angular aluminum nitride particles (TFZ-S30P manufactured by Toyo Aluminum K.K., D50 = 33 μm, BET specific surface area = 0.12 $m^2/g$) was used instead of FAN-f80-A1.

[Surface treatment 1: Alumina surface treatment]

A hydrolysis solution-1 was prepared by dissolving 1.0 g of hexadecyltrimethoxysilane (manufactured by Tokyo Chemical Industry Co., Ltd., minimum coating area: 226 $m^2/g$) as a surface treatment agent in 2.6 g of a solvent (ethanol/water = 25/1).

100 g of alumina AA-3 (manufactured by Sumitomo Chemical Co., Ltd., D50 = 3 μm, BET specific surface area = 0.54 $m^2/g$) was introduced in a container, 1/3 of the amount of the hydrolysis solution-1 corresponding to the amount of hexadecyltrimethoxysilane calculated by the following formula (i) was added with a dropper, the resultant mixture was stirred and mixed for 20 seconds at a rotation speed of 2000 rpm with a rotation/revolution mixer (manufactured by THINKY CORPORATION, ARE-310), and this was repeated three times. The resultant mixture was placed in a stainless steel vat, and heat-treated in a hot air oven at 120°C for 2 hours to obtain an alumina (B-3a) that had been surface-treated with hexadecyltrimethoxysilane.

$$\text{Amount (g) of surface treatment agent} = \frac{\text{BET specific surface area (m}^2\text{/g) of thermally conductive powder} \times \text{amount (g) of thermally conductive powder}}{\text{minimum coating area (m}^2\text{/g) of surface treatment agent}} \quad \text{(i)}$$

[Surface treatment 2: Alumina surface treatment]

A hydrolysis solution-2 was prepared by dissolving 1.0 g of KBM-3103C (decyltrimethoxysilane, manufactured by Shin-Etsu Chemical Co., Ltd., minimum coating area: 297 $m^2/g$) as a surface treatment agent in 9.0 g of a solvent (ethanol/water = 9/1).

100 g of alumina AA-3 (manufactured by Sumitomo Chemical Co., Ltd., D50 = 3 μm, BET specific surface area = 0.54 $m^2/g$) was introduced in a container, 1/3 of the amount of the hydrolysis solution-2 corresponding to the amount of decyltrimethoxysilane calculated by the above formula (i) was added with a dropper, the resultant mixture was stirred and mixed for 20 seconds at a rotation speed of 2000 rpm with a rotation/revolution mixer (manufactured by THINKY CORPORATION, ARE-310), and this was repeated three times. The resultant mixture was placed in a stainless steel vat, and heat-treated in a hot air oven at 120°C for 2 hours to obtain an alumina (B-3b) that had been surface-treated with decyltrimethoxysilane.

[Surface treatment 3: Zinc oxide surface treatment]

A hydrolysis solution-3 was prepared by dissolving 5.0 g of hexadecyltrimethoxysilane (manufactured by Tokyo Chemical Industry Co., Ltd., minimum coating area: 226 $m^2/g$) as a surface treatment agent in 13.0 g of a solvent (ethanol/water = 25/1).

To pulverize 500 g of JIS class 1 zinc oxide (manufactured by Hakusui Tech Co., Ltd.) with a ball mill, the zinc oxide was placed in a 5 L PE container together with 5 Kg of alumina balls with a diameter of 10 mm, and the ball mill was rotated at a rotation speed of 90 rpm for 3 hours to pulverize the zinc oxide. The resulting zinc oxide had a D50 of 0.5 μm and a BET specific surface area of 4.1 $m^2/g$.

Zinc oxide (B-4a) that had been surface-treated with hexadecyltrimethoxysilane was obtained in the same manner as in Surface Treatment 1, except that instead of the alumina AA-3 used in Surface Treatment 1, 100 g of the product obtained from the ball mill pulverization of JIS class 1 zinc oxide (D50 = 0.5 μm, BET specific surface area = 4.1

$m^2/g$) was used, and the hydrolysis solution-3 was used instead of the hydrolysis solution-1.

[Surface treatment 4: Zinc oxide surface treatment]

A hydrolysis solution-4 was prepared by dissolving 2.0 g of KBM-3103C (decyltrimethoxysilane, manufactured by Shin-Etsu Chemical Co., Ltd., minimum coating area: 297 $m^2/g$) as a surface treatment agent in 18.0 g of a solvent (ethanol/water = 9/1).

Zinc oxide (B-4b) that had been surface-treated with decyltrimethoxysilane was obtained in the same manner as in Surface Treatment 2, except that instead of the alumina AA-3 used in Surface Treatment 2, 100 g of the product obtained from the ball mill pulverization of JIS class 1 zinc oxide (D50 = 0.5 $\mu$m, BET specific surface area = 4.1 $m^2/g$) was used, and hydrolysis solution-4 was used instead of hydrolysis solution-2.

[Surface treatment 5: Zinc oxide surface treatment]

Zinc oxide (B-4c) that had been surface-treated with hexadecyltrimethoxysilane was obtained in the same manner as in Surface Treatment 3, except that instead of the product obtained from the ball mill pulverization of JIS class 1 zinc oxide (D50 = 0.5 $\mu$m), 100 g of JIS class 1 zinc oxide (manufactured by Hakusui Tech Co., Ltd., D50 = 0.8 $\mu$m, BET specific surface area = 4.0 $m^2/g$) was used.

[Surface treatment 6: Alumina surface treatment]

A hydrolysis solution-5 was prepared by dissolving 0.97 g of $\alpha$-butyl-$\omega$-(2-trimethoxysilylethyl)polydimethylsiloxane (molecular weight 1400, minimum coating area: 55.9 $m^2/g$) as a surface treatment agent in 2.53 g of a solvent (isopropanol/water = 25/1). The amount of the $\alpha$-butyl-$\omega$-(2-trimethoxysilylethyl)polydimethylsiloxane was an equivalent amount to 50% by mass calculated by the above formula (i).

100 g of alumina AA-3 (manufactured by Sumitomo Chemical Co., Ltd., D50 = 3 $\mu$m, BET specific surface area = 0.54 $m^2/g$) was introduced in a container, 1/3 of the amount of the hydrolysis solution-5 was added with a dropper, the resultant mixture was stirred and mixed for 20 seconds at a rotation speed of 2000 rpm with a rotation/revolution mixer (manufactured by THINKY CORPORATION, ARE-310), and this was repeated three times. The resultant mixture was placed in a stainless steel vat, and heat-treated in a hot air oven at 120°C for 2 hours to obtain an alumina (B-3c) that had been surface-treated with $\alpha$-butyl-$\omega$-(2-trimethoxysilylethyl)polydimethylsiloxane.

[Surface treatment 7: Zinc oxide surface treatment]

A hydrolysis solution-6 was prepared by dissolving 3.57 g of $\alpha$-butyl-$\omega$-(2-trimethoxysilylethyl)polydimethylsiloxane (molecular weight 1400, minimum coating area: 55.9 $m^2/g$) as a surface treatment agent in 9.28 g of a solvent (isopropanol/water = 25/1). The amount of the $\alpha$-butyl-$\omega$-(2-trimethoxysilylethyl)polydimethylsiloxane was an equivalent amount to 50% by mass calculated by the above formula (i).

To pulverize 500 g of JIS class 1 zinc oxide (manufactured by Hakusui Tech Co., Ltd.) with a ball mill, the zinc oxide was placed in a 5 L PE container together with 5 Kg of alumina balls with a diameter of 10 mm, and the ball mill was rotated at a rotation speed of 90 rpm for 3 hours to pulverize the zinc oxide. The resulting zinc oxide had a D50 of 0.5 $\mu$m and a BET specific surface area of 4.1 $m^2/g$. That zinc oxide was introduced in a container, 1/3 of the amount of the hydrolysis solution-6 was added with a dropper, the resultant mixture was stirred and mixed for 20 seconds at a rotation speed of 2000 rpm with a rotation/revolution mixer (manufactured by THINKY CORPORATION, ARE-310), and this was repeated three times. The resultant mixture was placed in a stainless steel vat, and heat-treated in a hot air oven at 120°C for 2 hours to obtain zinc oxide (B-4d) that had been surface-treated with $\alpha$-butyl-$\omega$-(2-trimethoxysilylethyl)polydimethylsiloxane.

[Surface treatment 8: Zinc oxide surface treatment]

A hydrolysis solution-7 was prepared by dissolving 3.57 g of $\alpha$-butyl-$\omega$-(2-trimethoxysilylethyl)polydimethylsiloxane (molecular weight 1400, minimum coating area: 55.9 $m^2/g$) as a surface treatment agent in 9.28 g of a solvent (isopropanol/water = 25/1). The amount of the $\alpha$-butyl-$\omega$-(2-trimethoxysilylethyl)polydimethylsiloxane was an equivalent amount to 50% by mass calculated by the above formula (i).

100 g of JIS class 1 zinc oxide (manufactured by Hakusui Tech Co., Ltd., D50 = 0.8 $\mu$m, BET specific surface area = 4.0 $m^2/g$) was introduced in a container, 1/3 of the amount of the hydrolysis solution-7 was added with a dropper, the resultant mixture was stirred and mixed for 20 seconds at a rotation speed of 2000 rpm with a rotation/revolution mixer (manufactured by THINKY CORPORATION, ARE-310), and this was repeated three times. The resultant mixture was placed in a stainless steel vat, and heat-treated in a hot air oven at 120°C for 2 hours to obtain zinc oxide (B-4e) that had

been surface-treated with α-butyl-ω-(2-trimethoxysilylethyl)polydimethylsiloxane.

[Surface treatment 9: Zinc oxide surface treatment]

Zinc oxide-1 that had been surface-treated with hexadecyltrimethoxysilane was obtained in the same manner as in Surface Treatment 3, except that instead of the product obtained from the ball mill pulverization of JIS class 1 zinc oxide (manufactured by Hakusui Tech Co., Ltd.) used in Surface Treatment 3, 100 g of JIS class 1 zinc oxide (manufactured by Sakai Chemical Industry Co., Ltd., D50 = 0.45 μm, BET specific surface area = 9.0 $m^2/g$) was used.

[Surface treatment 10: Zinc oxide surface treatment]

Zinc oxide-2 that had been surface-treated with α-butyl-ω-(2-trimethoxysilylethyl)polydimethylsiloxane was obtained in the same manner as in Surface Treatment 7, except that instead of the product obtained from the ball mill pulverization of JIS class 1 zinc oxide (manufactured by Hakusui Tech Co., Ltd.) used in Surface Treatment 7, 100 g of JIS class 1 zinc oxide (manufactured by Sakai Chemical Industry Co., Ltd., D50 = 0.45 μm, BET specific surface area = 9.0 $m^2/g$) was used.

[Surface treatment 11: Zinc oxide surface treatment]

A hydrolysis solution-8 was prepared by dissolving 1.0 g of KBM-3033 (n-propyltrimethoxysilane, manufactured by Shin-Etsu Chemical Co., Ltd., minimum coating area: 475 $m^2/g$) as a surface treatment agent in 9.0 g of a solvent (ethanol/water = 9/1).

To pulverize 500 g of JIS class 1 zinc oxide (manufactured by Hakusui Tech Co., Ltd.) with a ball mill, the zinc oxide was placed in a 5 L PE container together with 5 Kg of alumina balls with a diameter of 10 mm, and the ball mill was rotated at a rotation speed of 90 rpm for 3 hours to pulverize the zinc oxide. The resulting zinc oxide had a D50 of 0.5 μm and a BET specific surface area of 4.1 $m^2/g$.

Zinc oxide-3 that had been surface-treated with n-propyltrimethoxysilane was obtained in the same manner as in Surface Treatment 2, except that instead of the alumina AA-3 used in surface treatment 2, 100 g of the product obtained from the ball mill pulverization of JIS class 1 zinc oxide (D50 = 0.5 μm, BET specific surface area = 4.1 $m^2/g$) was used, and the hydrolysis solution-8 was used instead of the hydrolysis solution-2.

[Surface treatment 12: Alumina surface treatment]

An alumina-1 that had been surface-treated with hexadecyltrimethoxysilane was obtained in the same manner as in Surface Treatment 3, except that instead of the product obtained from the ball mill pulverization of JIS class 1 zinc oxide used in Surface Treatment 3, 100 g of alumina AKP-30 (manufactured by Sumitomo Chemical Co., Ltd., D50 = 0.3 μm, BET specific surface area = 6.7 $m^2/g$) was used.

[Surface treatment 13: Alumina surface treatment]

An alumina-2 that had been surface-treated with decyltrimethoxysilane was obtained in the same manner as in Surface Treatment 4, except that instead of the product obtained from the ball mill pulverization of JIS class 1 zinc oxide used in Surface Treatment 4, 100 g of alumina AKP-30 (manufactured by Sumitomo Chemical Co., Ltd., D50 = 0.3 μm, BET specific surface area = 6.7 $m^2/g$) was used.

(Examples 1 to 7 and Comparative Examples 1 to 6)

(1) Preparation of heat conducting composition

Each component of the types and blending amounts shown in Table 1 and Table 2 was weighed into a polyethylene container, put in a rotation/revolution mixer (manufactured by THINKY CORPORATION), and stirred and mixed at a rotation speed of 2000 rpm for 90 seconds. After cooling, the mixture was loosened, and further stirred and mixed in the rotation/revolution mixer at a rotation speed of 2000 rpm for 90 seconds to obtain the heat conducting composition of each example and comparative example. In Comparative Example 6, when the components of the types and blending amounts shown in Table 2 were mixed, since the mixture remained in a powder state and could not be formed into a sheet, the various evaluations described later could not be performed.

(2) Sheet production

A defoamed heat conducting composition was placed on a polyester film having a thickness of 0.1 mm that had been subjected to a silicone release treatment, then a polyester film having a thickness of 0.1 mm was placed thereon to prevent air from entering, molding was carried out with a rolling roll, curing was carried out at 120°C for 60 minutes, and the cured sheet was further left at room temperature (23°C) for one day, whereby a sheet having a thickness of 2.0 mm was obtained.

The details of each component listed in Table 1 and Table 2 used to prepare the heat conducting compositions are as follows.

<Curable silicone resin (A)>

As the curable silicone resin (A), an addition reaction-curable silicone resin composed of the following components (a-1) to (a-4) was used.

- Organopolysiloxane (a-1) having an alkenyl group: DMS-V21 (manufactured by GelSet, kinematic viscosity (25°C) = 98.4 $mm^2/s$), 97.9 g
- Organohydrogenpolysiloxane (a-2): DMS-H21 (manufactured by GelSet, kinematic viscosity (25°C) = 100.5 $mm^2/s$), 1.8 g
- Platinum group metal-based curing catalyst (a-3): SIP6830.3 (GelSet), 0.1 g
- Addition reaction inhibitor (a-4): ME75: Momentive Performance Materials Japan GK, 0.2 g

<Thermally conductive powder (B)>

[Aluminum nitride particles (B-1)]

- Silicon-containing oxide-coated aluminum nitride particles (B-1): Silicon-containing oxide-coated aluminum nitride particles obtained in Synthesis Example 1, D50 = 76 μm, BET specific surface area = 0.05 $m^2/g$

[Aluminum nitride particles (B-2)]

- Silicon-containing oxide-coated aluminum nitride particles (B-2a): Silicon-containing oxide-coated aluminum nitride particles obtained in Synthesis Example 2, D50 = 34 μm, BET specific surface area = 0.12 $m^2/g$
- Silicon-containing oxide-coated aluminum nitride particles (B-2b): Silicon-containing oxide-coated aluminum nitride particles obtained in Synthesis Example 3, D50 = 33 μm, BET specific surface area = 0.12 $m^2/g$

[Metal oxide (B-3) other than zinc oxide]

- Alumina (B-3a): Alumina surface-treated product obtained in Surface Treatment 1, D50 = 3 μm, BET specific surface area = 0.54 $m^2/g$
- Alumina (B-3b): Alumina surface-treated product obtained in Surface Treatment 2, D50 = 3 μm, BET specific surface area = 0.54 $m^2/g$
- Alumina (B-3c): Alumina surface-treated product obtained in Surface Treatment 6, D50 = 3 μm, BET specific surface area = 0.54 $m^2/g$

[Zinc oxide (B-4)]

- Zinc oxide (B-4a): Surface-treated zinc oxide product obtained in Surface Treatment 3, D50 = 0.5 μm, BET specific surface area = 4.1 $m^2/g$
- Zinc oxide (B-4b): Surface-treated zinc oxide product obtained in Surface Treatment 4, D50 = 0.5 μm, BET specific

surface area = 4.1 $m^2/g$

- Zinc oxide (B-4c): Surface-treated zinc oxide product obtained in Surface Treatment 5, D50 = 0.8 μm, BET specific surface area = 4.0 $m^2/g$
- Zinc oxide (B-4d): Surface-treated zinc oxide product obtained in Surface Treatment 7, D50 = 0.5 μm, BET specific surface area = 4.1 $m^2/g$
- Zinc oxide (B-4e): Surface-treated zinc oxide product obtained in Surface Treatment 8, D50 = 0.8 μm, BET specific surface area = 4.0 $m^2/g$

[Zinc oxide having a BET specific surface area of 9.0 $m^2/g$ or more]

- Zinc oxide-1: Zinc oxide surface-treated product obtained in Surface Treatment 9, D50 = 0.45 μm, BET specific surface area = 9.0 $m^2/g$
- Zinc oxide-2: Zinc oxide surface-treated product obtained in Surface Treatment 10, D50 = 0.45 μm, BET specific surface area = 9.0 $m^2/g$

[Zinc oxide surface-treated with n-propyltrimethoxysilane]

- Zinc oxide-3: Zinc oxide surface-treated product obtained in Surface Treatment 11, D50 = 0.5 μm, BET specific surface area = 4.1 $m^2/g$

[Zinc oxide not surface-treated]

- Zinc oxide-4: Ball-milled product obtained by pulverizing JIS class 1 zinc oxide (manufactured by Hakusui Tech Co., Ltd.) with a ball mill, D50 = 0.5 μm, BET specific surface area = 4.1 $m^2/g$

[Alumina having a cumulative volume-based 50% particle size of less than 1 μm]

Alumina-1: Alumina surface-treated product obtained in Surface Treatment 12, D50 = 0.3 μm, BET specific surface area = 6.7 $m^2/g$
Alumina-2: Alumina surface-treated product obtained in Surface Treatment 13, D50 = 0.3 μm, BET specific surface area = 6.7 $m^2/g$

<Dimethyl silicone oil (C)>

- TSF-458-50: Manufactured by Momentive Performance Materials Japan GK, kinematic viscosity (25°C) = 50 $mm^2/s$

The kinematic viscosity at 25°C of the organopolysiloxane (a-1) having an alkenyl group, the organopolysiloxane (a-2) having a hydrosilyl group, and the dimethyl silicone oil (C) was measured using an Ostwald viscometer (manufactured by Sibata Scientific Technology Ltd.).

The cumulative volume-based 50% particle size (D50) and BET specific surface area of the thermally conductive powder (B) were measured by the following measurement methods.

(1) Cumulative volume-based 50% particle size (D50)

The cumulative volume-based 50% particle size was determined from the particle size at which the cumulative volume was 50% in a particle size distribution measured using a laser diffraction particle size distribution analyzer (manufactured by MicrotracBEL Corp., trade name: MT3300EXII).

(2) Specific surface area

The specific surface area was measured using a specific surface area measurement apparatus (manufactured by Mountech Co., Ltd., trade name: Macsorb HM model-1210) by the single-point BET method based on nitrogen adsorption. A mixed gas of 70% by volume He and 30% by volume $N_2$ was used as the adsorption gas.

<Evaluation items>

(1) Thermal conductivity

The obtained sheet having a thickness of 2.0 mm was cut into strips with a width of 20 mm and a length of 30 mm. Two blocks made by stacking three strips on top of each other were prepared, and the surface of the blocks was covered with wrap. The thermal conductivity was measured by setting the probes of a hot disk method measuring device (manufactured by Kyoto Electronics Manufacturing Co., Ltd., TPS-2500) conforming to ISO 22007-2 in such a way that the probes sandwiched the blocks from above and below.

(2) Asker C hardness

The obtained sheet having a thickness of 2.0 mm was cut into strips with a width of 20 mm and a length of 30 mm. A block made by stacking three strips on top of each other was used as a measurement sample. Using an Asker C hardness tester (Asker C rubber hardness tester, manufactured by Kobunshi Keiki Co., Ltd.), the Asker C hardness of the measurement sample was measured according to JIS K7312: 1996 hardness test (Type C).

(3) Viscosity

Using a flow viscometer (GFT-100EX, manufactured by Shimadzu Corporation) according to JIS K7210: 2014, and viscosity was measured at a temperature of 30°C, a die hole size (diameter) of 1.0 mm, a test force of 10 (weight 1.8 kg).

Table 1

| | | | Units | Example 1 | Example 2 | Example 3 | Example 4 | Example 5 | Example 6 | Example 7 |
|---|---|---|---|---|---|---|---|---|---|---|
| Curable silicone resin (A) | Addition reaction-curable silicone resin | | parts by mass | 100 | 100 | 100 | 100 | 100 | 100 | 100 |
| Thermally conductive powder (B) | Aluminum nitride particles (B-1) | Silicon-containing oxide-coated aluminum nitride particles (B-1), D50 = 76 μm, BET specific surface area = 0.05 $m^2/g$ | parts by mass | 1395 | 1395 | 1395 | 1395 | 1088 | 1395 | 1395 |
| | Aluminum nitride particles (B-2) | Silicon-containing oxide-coated aluminum nitride particles (B-2a), D50 = 34 μm, BET specific surface area = 0.12 $m^2/g$ | parts by mass | - | 558 | - | - | - | - | - |
| | | Silicon-containing oxide-coated aluminum nitride particles (B-2b), D50 = 33 μm, BET specific surface area = 0.12 $m^2/g$ | parts by mass | 558 | - | 558 | 558 | 435 | 558 | 558 |
| | Metal oxide (B-3) other than zinc oxide | Alumina (B-3a), treated with hexadecyltrimethoxysilane, D50 = 3 μm, BET specific surface area = 0.54 $m^2/g$ | parts by mass | 333 | 333 | 333 | - | 260 | | |
| | | Alumina (B-3b), treated with decyltrimethoxysilane, D50 = 3 μm, BET specific surface area = 0.54 $m^2/g$ | parts by mass | - | - | - | 333 | - | - | - |
| | | Alumina (B-3c), treated with α-butyl-ω-(2-trimethoxysilylethyl)polydimethylsiloxane, D50 = 3 μm, BET specific surface area = 0.54 $m^2/g$ | parts by mass | - | - | - | - | - | 340 | 340 |
| | Zinc oxide (B -4) | Zinc oxide (B-4a), product obtained from ball mill pulverization of JIS class 1 zinc oxide, treated with hexadecyltrimethoxysilane, D50 = 0.5 μm, BET specific surface area = 4.1 $m^2/g$ | parts by mass | 964 | 964 | - | - | 752 | - | - |
| | | Zinc oxide (B-4b), product obtained from ball mill pulverization of JIS class 1 zinc oxide, treated with decyltrimethoxysilane, D50 = 0.5 μm, BET specific surface area = 4.1 $m^2/g$ | parts by mass | - | - | - | 964 | - | - | - |
| | | Zinc oxide (B-4c), JIS class 1 zinc oxide, treated with hexadecyltrimethoxysilane, D50 = 0.8 μm, BET specific surface area = 4.0 $m^2/g$ | parts by mass | - | - | 964 | - | - | - | - |

(continued)

| | | | Units | Example 1 | Example 2 | Example 3 | Example 4 | Example 5 | Example 6 | Example 7 |
|---|---|---|---|---|---|---|---|---|---|---|
| Curable silicone resin (A) | Addition reaction-curable silicone resin | | parts by mass | 100 | 100 | 100 | 100 | 100 | 100 | 100 |
| | | Zinc oxide (B-4d), product obtained from ball mill pulverization of JIS class 1 zinc oxide, treated with α-butyl-ω-(2-trimethoxysilylethyl) polydimethylsiloxane, D50 = 0.5 μm, BET specific surface area = 4.1 $m^2/g$ | parts by mass | - | - | - | - | - | 1122 | - |
| | | Zinc oxide (B-4e), JIS class 1 zinc oxide, treated with α-butyl-ω-(2-trimethoxysilylethyl)polydimethylsiloxane, D50 = 0.8 μm, BET specific surface area = 4.0 $m^2/g$ | parts by mass | - | - | - | - | - | - | 1122 |
| | Zinc oxide-1, JIS class 1 zinc oxide, treated with hexadecyltrimethoxysilane, D50 = 0.45 μm, BET specific surface area = 9.0 $m^2/g$ | | parts by mass | - | - | - | - | - | - | - |
| | Zinc oxide-2, JIS class 1 zinc oxide, treated with α-butyl-ω-(2-trimethoxysilylethyl)polydimethylsiloxane, D50 = 0.45 μm, BET specific surface area = 9.0 $m^2/g$ | | parts by mass | - | - | - | - | - | - | - |
| | Zinc oxide-3, product obtained from ball mill pulverization of JIS class 1 zinc oxide, treated with n-propyltrimethoxysilane, D50 = 0.5 μm, BET specific surface area = 4.1 $m^2/g$ | | parts by mass | - | - | - | - | - | - | - |
| | Zinc oxide-4, product obtained from ball mill pulverization of JIS class 1 zinc oxide, not surface treated, D50 = 0.5 μm, BET specific surface area = 4.1 $m^2/g$ | | parts by mass | - | - | - | - | - | - | - |
| | Alumina- 1, treated with hexadecyltrimethoxysilane, D50 = 0.3 μm, BET specific surface area = 6.7 $m^2/g$ | | parts by mass | - | - | - | - | - | - | - |
| | Alumina-2, treated with decyltrimethoxysilane, D50 = 0.3 μm, BET specific surface area = 6.7 $m^2/g$ | | parts by mass | - | - | - | - | - | - | - |

(continued)

| | | Units | Example 1 | Example 2 | Example 3 | Example 4 | Example 5 | Example 6 | Example 7 |
|---|---|---|---|---|---|---|---|---|---|
| Curable silicone resin (A) | Addition reaction-curable silicone resin | parts by mass | 100 | 100 | 100 | 100 | 100 | 100 | 100 |
| Dimethyl silicone oil (C) | | parts by mass | 23.4 | 23.4 | 23.4 | 23.4 | 22.6 | 23.4 | 23.4 |
| Content of curable silicone resin (A) based on total amount of composition | | % by mass | 2.96 | 2.96 | 2.96 | 2.96 | 3.76 | 2.83 | 2.83 |
| Content of thermally conductive powder (B) based on total amount of composition | | % by mass | 96.34 | 96.34 | 96.34 | 96.34 | 95.37 | 96.51 | 96.51 |
| Content of dimethyl silicone oil (C) based on total amount of composition | | % by mass | 0.69 | 0.69 | 0.69 | 0.69 | 0.85 | 0.66 | 0.66 |
| Content of aluminum nitride particles (B-1) in thermally conductive powder (B) | | % by mass | 42.92 | 42.92 | 42.92 | 42.92 | 42.92 | 40.85 | 40.85 |
| Content of aluminum nitride particles (B-2) in thermally conductive powder (B) | | % by mass | 17.17 | 17.17 | 17.17 | 17.17 | 17.16 | 16.34 | 16.34 |
| Content of metal oxide (B-3) other than zinc oxide in thermally conductive powder (B) | | % by mass | 10.25 | 10.25 | 10.25 | 10.25 | 10.26 | 9.96 | 9.96 |
| Content of zinc oxide (B-4) in thermally conductive powder (B) | | % by mass | 29.66 | 29.66 | 29.66 | 29.66 | 29.66 | 32.86 | 32.86 |
| Content of alumina having cumulative volume-based 50% particle size of less than 1 μm in thermally conductive powder (B) | | % by mass | - | - | - | - | - | - | - |
| Content of zinc oxide other than zinc oxide (B-4) in thermally conductive powder (B) | | % by mass | - | - | - | - | - | - | - |
| Thermal conductivity | | W/m·K | 13.5 | 12.8 | 14.6 | 13.6 | 11.1 | 11.2 | 10.5 |
| Hardness (Asker C hardness) | | - | 37 | 46 | 55 | 52 | 20 | 22 | 21 |
| Viscosity (25°C) | | Pa·s | 2718 | 38270 | 17430 | 25300 | 180 | 120 | 229 |

Table 2

| | | | Units | Comparative Example 1 | Comparative Example 2 | Comparative Example 3 | Comparative Example 4 | Comparative Example 5 | Comparativ e Example 6 |
|---|---|---|---|---|---|---|---|---|---|
| Curable silicone resin (A) | Addition reaction-curable silicone resin | | parts by mass | 100 | 100 | 100 | 100 | 100 | 100 |
| Thermally conductive powder (B) | Aluminum nitride particles (B-1) | Silicon-containing oxide-coated aluminum nitride particles (B-1), D50 = 76 μm, BET specific surface area = 0.05 $m^2/g$ | parts by mass | 1395 | 1395 | 1395 | 1395 | 1395 | 1395 |
| | Aluminum nitride particles (B-2) | Silicon-containing oxide-coated aluminum nitride particles (B-2a), D50 = 34 μm, BET specific surface area = 0.12 $m^2/g$ | parts by mass | 558 | - | - | - | - | - |

(continued)

| | | | Units | Comparative Example 1 | Comparative Example 2 | Comparative Example 3 | Comparative Example 4 | Comparative Example 5 | Comparativ e Example 6 |
|---|---|---|---|---|---|---|---|---|---|
| Curable silicone resin (A) | Addition reaction-curable silicone resin | | parts by mass | 100 | 100 | 100 | 100 | 100 | 100 |
| | | Silicon-containing oxide-coated aluminum nitride particles (B-2b), D50 = 33 μm, BET specific surface area = 0.12 $m^2/g$ | parts by mass | - | 558 | 558 | 558 | 558 | 558 |
| | Metal oxide (B-3) other than zinc oxide | Alumina (B-3a), treated with hexadecyltrimethox ysilane, D50 = 3 μm, BET specific surface area = 0.54 $m^2/g$ | parts by mass | 333 | - | 333 | | 333 | 333 |
| | | Alumina (B-3b), treated with decyltrimethoxysila ne, D50 = 3 μm, BET specific surface area = 0.54 $m^2/g$ | parts by mass | - | 333 | | | | |
| | | Alumina (B-3c), treated with α-butyl-ω-(2-trimethoxysilylethyl) p olydimethylsiloxane, D50 = 3 μm, BET specific surface area = 0.54 $m^2/g$ | parts by mass | - | - | - | 340 | - | - |
| | Zinc oxide (B -4) | Zinc oxide (B-4a), product obtained from ball mill pulverization of JIS class 1 zinc oxide, treated with hexadecyltrimethoxysi lane, D50 = 0.5 μm, BET specific surface area = 4.1 $m^2/g$ | parts by mass | - | - | - | - | - | - |

(continued)

| | | | Units | Comparative Example 1 | Comparative Example 2 | Comparative Example 3 | Comparative Example 4 | Comparative Example 5 | Comparativ e Example 6 |
|---|---|---|---|---|---|---|---|---|---|
| Curable silicone resin (A) | Addition reaction-curable silicone resin | | parts by mass | 100 | 100 | 100 | 100 | 100 | 100 |
| | | Zinc oxide (B-4b), product obtained from ball mill pulverization of JIS class 1 zinc oxide, treated with decyltrimethoxysilane, D50 = 0.5 μm, BET specific surface area = 4.1 $m^2/g$ | parts by mass | - | - | - | - | - | - |
| | | Zinc oxide (B-4c), JIS class 1 zinc oxide, treated with hexadecyltrimethoxysi lane, D50 = 0.8 μm, BET specific surface area = 4.0 $m^2/g$ | parts by mass | - | - | - | - | - | - |
| | | Zinc oxide (B-4d), product obtained from ball mill pulverization of JIS class 1 zinc oxide, treated with α-butyl-ω-(2-trimethoxysilylethyl)p olydimethylsiloxane, D50 = 0.5 μm, BET specific surface area = 4.1 $m^2/g$ | parts by mass | - | - | - | - | - | - |
| | | Zinc oxide (B-4e), JIS class 1 zinc oxide, treated with α-butyl-ω-(2-trimethoxysilylethyl)p olydimethylsiloxane, D50 = 0.8 μm, BET specific surface area = 4.0 $m^2/g$ | parts by mass | - | - | - | - | - | - |

(continued)

| | | | Units | Comparative Example 1 | Comparative Example 2 | Comparative Example 3 | Comparative Example 4 | Comparative Example 5 | Comparativ e Example 6 |
|---|---|---|---|---|---|---|---|---|---|
| Curable silicone resin (A) | Addition reaction-curable silicone resin | | parts by mass | 100 | 100 | 100 | 100 | 100 | 100 |
| | | Zinc oxide- 1, JIS class 1 zinc oxide, treated with hexadecyl-trimethoxysilane, D50 = 0.45 μm, BET specific surface area = 9.0 $m^2/g$ | parts by mass | - | - | 964 | - | - | - |
| | | Zinc oxide-2, JIS class 1 zinc oxide, treated with α-butyl-ω-(2-trimethoxysilylethyl)polydimethyl siloxane, D50 = 0.45 μm, BET specific surface area = 9.0 $m^2/g$ | parts by mass | - | - | - | 1307 | - | - |
| | | Zinc oxide-3, product obtained from ball mill pulverization of JIS class 1 zinc oxide, treated with n-propyltrimethoxysilane, D50 = 0.5 μm, BET specific surface area = 4.1 $m^2/g$ | parts by mass | | | - | - | 964 | - |
| | | Zinc oxide-4, product obtained from ball mill pulverization of JIS class 1 zinc oxide, not surface treated, D50 = 0.5 μm, BET specific surface area = 4.1 $m^2/g$ | parts by mass | - | - | - | - | - | 961 |
| | | Alumina-1, treated with hexa-decyltrimethoxysilane, D50 = 0.3 μm, BET specific surface area = 6.7 $m^2/g$ | parts by mass | 666 | - | - | - | - | - |
| | | Alumina-2, treated with decyl-trimethoxysilane, D50 = 0.3 μm, BET specific surface area = 6.7 $m^2/g$ | parts by mass | - | 666 | - | - | - | - |

(continued)

| | | Units | Comparative Example 1 | Comparative Example 2 | Comparative Example 3 | Comparative Example 4 | Comparative Example 5 | Comparative Example 6 |
|---|---|---|---|---|---|---|---|---|
| Curable silicone resin (A) | Addition reaction-curable silicone resin | parts by mass | 100 | 100 | 100 | 100 | 100 | 100 |
| Dimethyl silicone oil (C) | | parts by mass | 23.4 | 23.4 | 23.4 | 23.4 | 23.4 | 23.4 |
| Content of curable silicone resin (A) based on total amount of composition | | % by mass | 3.25 | 3.25 | 2.96 | 2.69 | 2.96 | 2.96 |
| Content of thermally conductive powder (B) based on total amount of composition | | % by mass | 95.99 | 95.99 | 96.34 | 96.69 | 96.34 | 96.34 |
| Content of dimethyl silicone oil (C) based on total amount of composition | | % by mass | 0.76 | 0.76 | 0.69 | 0.63 | 0.69 | 0.69 |
| Content of aluminum nitride particles (B-1) in thermally conductive powder (B) | | % by mass | 47.26 | 47.26 | 42.92 | 38.75 | 42.92 | 42.92 |
| Content of aluminum nitride particles (B-2) in thermally conductive powder (B) | | % by mass | 18.90 | 18.90 | 17.17 | 15.50 | 17.17 | 17.17 |
| Content of metal oxide (B-3) other than zinc oxide in thermally conductive powder (B) | | % by mass | 11.28 | 11.28 | 10.25 | 9.44 | 10.25 | 10.25 |
| Content of zinc oxide (B-4) in thermally conductive powder (B) | | % by mass | - | - | - | - | - | - |
| Content of alumina having cumulative volume-based 50% particle size of less than 1 μm in thermally conductive powder (B) | | % by mass | 22.56 | 22.56 | - | - | - | - |
| Content of zinc oxide other than zinc oxide (B-4) in thermally conductive powder (B) | | % by mass | - | - | 29.66 | 36.31 | 29.66 | 29.66 |
| Thermal conductivity | | W/m·K | 12.8 | 13.2 | 13.5 | 9.5 | 12.1 | -*1 |
| Hardness (Asker C hardness) | | - | 58 | 60 | 56 | 19 | 90 | -*1 |
| Viscosity (25°C) | | Pa·s | 95000 | 94000 | 200000 | 83 | -*1 | -*1 |
| * 1: Could not be evaluated. | | | | | | | | |

From Table 1 and Table 2, it can be seen that the heat conducting compositions of Examples 1 to 7, which contained, as the thermally conductive powder (B), the aluminum nitride particles (B-1), the aluminum nitride particles (B-2), the metal oxide (B-3) other than zinc oxide, and the zinc oxide (B -4), all had a low viscosity at 25°C of 50000 Pa·s or less, and that the cured products thereof had a high thermal conductivity of 10.0 W/m·K or more and a high heat conduction performance and good fluidity could both be achieved. In addition, the cured products of the heat conducting compositions of Examples 1 to 7 had an Asker C hardness of 20 to 55, which is an appropriate hardness. On the other hand, although the heat conducting compositions of Comparative Examples 1 and 2, which did not contain zinc oxide (B-4) as the thermally conductive powder (B) and contained alumina with a cumulative volume-based 50% particle size of less than 1 μm, had a high thermal conductivity, the viscosity at 25°C was as high as 94000 Pa·s and 95000 Pa·s. Further, the heat conducting compositions of Comparative Example 3, which contained, as the thermally conductive powder (B), zinc oxide having a BET specific surface area of 9.0 $m^2/g$ and that was surface-treated with hexadecyltrimethoxysilane instead of the zinc oxide (B-4), had a very high viscosity at 25°C of 200000 Pa·s. In addition, although the heat conducting compositions of Comparative Example 4, which contained, as the thermally conductive powder (B), zinc oxide having a BET specific surface area of 9.0 $m^2/g$ and that was surface-treated with α-butyl-ω-(2-trimethoxysilylethyl)polydimethylsiloxane instead of the zinc oxide (B-4), had a low viscosity at 25°C, it had a low thermal conductivity of 9.5 W/m·K.
Furthermore, the heat conducting composition of Comparative Example 5, which contained, as the thermally conductive powder (B), zinc oxide surface-treated with n-propyltrimethoxysilane instead of zinc oxide (B-4), was too hard, and hence the composition could not be discharged from the die hole of the flow viscometer and so the viscosity could not be measured. Moreover, in Comparative Example 6, which contained, as the thermally conductive powder (B), zinc oxide that had not been surface-treated instead of the zinc oxide (B-4), the state after the mixing of each component was powdery and the composition could not be formed into a sheet.

## Claims

**1.** A heat conducting composition comprising a curable silicone resin (A) and a thermally conductive powder (B), wherein

the thermally conductive powder (B) has a content of 70 to 98% by mass based on the total amount of the heat conducting composition,
the thermally conductive powder (B) contains, based on the total amount of the thermally conductive powder (B), 30 to 75% by mass of aluminum nitride particles (B-1) having a cumulative volume-based 50% particle size of 50 μm or more and 150 μm or less, 10 to 30% by mass of aluminum nitride particles (B-2) having a cumulative volume-based 50% particle size of 15 μm or more and less than 50 μm, 5 to 15% by mass of a metal oxide (B-3) other than zinc oxide having a cumulative volume-based 50% particle size of 1 μm or more and less than 20 μm, and 10 to 40% by mass of zinc oxide (B-4) having a cumulative volume-based 50% particle size of 0.1 μm or more and less than 1 μm and a BET specific surface area of less than 9.0 $m^2/g$, wherein the cumulative volume-based 50% particle size is measured using a laser diffraction particle size distribution analyser and the BET specific surface area is measure by the nitrogen adsorption BET single-point method by gas flow method,
and
the metal oxide (B-3) other than zinc oxide and the zinc oxide (B-4) are both surface treated with at least one surface treatment agent selected from the group consisting of a silane coupling agent having an alkyl group having 10 to 22 carbon atoms and α-butyl-ω-(2-trimethoxysilylethyl)polydimethylsiloxane.

**2.** The heat conducting composition according to claim 1, wherein the aluminum nitride particles (B-2) are non-sintered broken angular aluminum nitride particles.

**3.** The heat conducting composition according to claim 1 or 2, wherein the metal oxide (B-3) other than zinc oxide is alumina.

**4.** The heat conducting composition according to any one of claims 1 to 3, wherein at least one kind of aluminum nitride particles selected from the group consisting of the aluminum nitride particles (B-1) and the aluminum nitride particles (B-2) has a silicon-containing oxide coating on a surface thereof.

**5.** The heat conducting composition according to any one of claims 1 to 4, wherein the curable silicone resin (A) is an addition reaction-curable silicone resin.

**6.** The heat conducting composition according to claim 5, wherein the addition reaction-curable silicone resin is constituted from an organopolysiloxane (a-1) having an alkenyl group, an organopolysiloxane (a-2) having a

hydrosilyl group, and a platinum group metal-based curing catalyst (a-3).

7. The heat conducting composition according to any one of claims 1 to 6, further comprising a dimethyl silicone oil (C).

8. The heat conducting composition according to any one of claims 1 to 7, wherein the heat conducting composition has a viscosity at 25°C of 50000 Pa·s or less, wherein the viscosity is measured by a method conforming to JIS K7210:2014.

9. A cured product of the heat conducting composition according to any one of claims 1 to 8.

10. The cured product of the heat conducting composition according to claim 9, wherein the cured product has a thermal conductivity of 10.0 W/m.K or more, wherein the thermal conductivity is measured by a method conforming to 18022007-2.

## Patentansprüche

1. Wärmeleitende Zusammensetzung, umfassend ein härtbares Siliconharz (A) und ein wärmeleitendes Pulver (B), wobei

   das wärmeleitende Pulver (B) einen Gehalt von 70 bis 98 Massen-%, bezogen auf die Gesamtmenge der wärmeleitenden Zusammensetzung, hat,
   das wärmeleitende Pulver (B), bezogen auf die Gesamtmenge des wärmeleitenden Pulvers (B), 30 bis 75 Massen-% Aluminiumnitridteilchen (B-1) mit einer kumulativen volumenbasierten 50 %-Teilchengröße von 50 μm oder mehr und 150 μm oder weniger, 10 bis 30 Massen-% Aluminiumnitridteilchen (B-2) mit einer kumulativen volumenbasierten 50 %-Teilchengröße von 15 μm oder mehr und weniger als 50 μm, 5 bis 15 Massen-% eines anderen Metalloxids (B-3) als Zinkoxid mit einer kumulativen volumenbasierten 50 %-Teilchengröße von 1 μm oder mehr und weniger als 20 μm und 10 bis 40 Massen-% Zinkoxid (B-4) mit einer kumulativen volumenbasierten 50 %-Teilchengröße von 0,1 μm oder mehr und weniger als 1 μm und einem spezifischen Oberflächenbereich nach BET von weniger als 9,0 $m^2/g$ enthält, wobei die kumulative volumenbasierte 50 %-Teilchengröße unter Verwendung eines Laserbeugungs-Teilchengrößenverteilungsanalysators gemessen wird und der spezifische Oberflächenbereich nach BET durch das Stickstoffadsorptions-BET-Einpunktverfahren mittels Gasflussmethode gemessen wird, und
   wobei das andere Metalloxid (B-3) als Zinkoxid und das Zinkoxid (B-4) beide mit mindestens einem Oberflächenbehandlungsmittel oberflächenbehandelt sind, ausgewählt aus der Gruppe bestehend aus einem Silankupplungsmittel, welches eine Alkylgruppe mit 10 bis 22 Kohlenstoffatomen enthält, und α-Butyl-ω-(2-trimethoxysilylethyl)-polydimethylsiloxan.

2. Wärmeleitende Zusammensetzung nach Anspruch 1, wobei die Aluminiumnitridteilchen (B-2) ungesinterte, gebrochene, kantige Aluminiumnitridpartikel sind.

3. Wärmeleitende Zusammensetzung nach Anspruch 1 oder 2, wobei das andere Metalloxid (B-3) als Zinkoxid Aluminiumoxid ist.

4. Wärmeleitende Zusammensetzung nach einem der Ansprüche 1 bis 3, wobei mindestens eine Art der Aluminiumnitridteilchen, ausgewählt aus der Gruppe bestehend aus den Aluminiumnitridteilchen (B-1) und den Aluminiumnitridteilchen (B-2), eine Beschichtung aus Silicium-enthaltendem Oxid auf einer Oberfläche davon aufweist.

5. Wärmeleitende Zusammensetzung nach einem der Ansprüche 1 bis 4, wobei das härtbare Siliconharz (A) ein unter Additionsreaktion härtbares Siliconharz ist.

6. Wärmeleitende Zusammensetzung nach Anspruch 5, wobei das unter Additionsreaktion härtbare Siliconharz aus einem Organopolysiloxan (a-1) mit einer Alkenylgruppe, einem Organopolysiloxan (a-2) mit einer Hydrosilylgruppe und einem Härtungskatalysator (a-3) auf Basis eines Metalls der Platingruppe gebildet ist.

7. Wärmeleitende Zusammensetzung nach einem der Ansprüche 1 bis 6, welche weiterhin ein Dimethylsiliconöl (C) enthält.

8. Wärmeleitende Zusammensetzung nach einem der Ansprüche 1 bis 7, wobei die wärmeleitende Zusammensetzung

eine Viskosität bei 25°C von 50000 Pa·s oder weniger aufweist, wobei die Viskosität nach einem Verfahren gemäß JIS K7210:2014 gemessen wird.

**9.** Gehärtetes Produkt der wärmeleitenden Zusammensetzung nach einem der Ansprüche 1 bis 8.

**10.** Gehärtetes Produkt der wärmeleitenden Zusammensetzung nach Anspruch 9, wobei das gehärtete Produkt eine Wärmeleitfähigkeit von 10,0 W/m·K oder mehr aufweist, wobei die Wärmeleitfähigkeit nach einem Verfahren gemäß ISO22007-2 gemessen wird.

**Revendications**

**1.** Composition thermoconductrice comprenant une résine de silicone durcissable (A) et une poudre thermiquement conductrice (B), dans laquelle

la poudre thermiquement conductrice (B) a une teneur de 70 à 98 % en masse basée sur la quantité totale de la composition thermoconductrice,
la poudre thermiquement conductrice (B) contient, sur la base de la quantité totale de la poudre thermiquement conductrice (B), 30 à 75 % en masse de particules de nitrure d'aluminium (B-1) ayant une taille de particule à 50 % basée sur le volume cumulé supérieure ou égale à 50 μm et inférieure ou égale à 150 μm, 10 à 30 % en masse de particules de nitrure d'aluminium (B-2) ayant une taille de particule à 50 % basée sur le volume cumulé supérieure ou égale à 15 μm et inférieure à 50 μm, 5 à 15 % en masse d'un oxyde métallique (B-3) autre que l'oxyde de zinc ayant une taille de particule à 50 % basée sur le volume cumulé supérieure ou égale à 1 μm et inférieure à 20 μm, et 10 à 40 % en masse d'oxyde de zinc (B-4) ayant une taille de particule à 50 % basée sur le volume cumulé supérieure ou égale à 0,1 μm et inférieure à 1 μm et une surface spécifique BET inférieure à 9,0 $m^2/g$,
dans laquelle la taille de particule à 50 % basée sur le volume cumulé est mesurée à l'aide d'un analyseur de distribution granulométrique par diffraction laser et la surface spécifique BET est mesurée par la méthode BET monopoint par adsorption d'azote par la méthode d'écoulement gazeux, et
l'oxyde métallique (B-3) autre que l'oxyde de zinc et l'oxyde de zinc (B-4) sont tous les deux traités en surface avec au moins un agent de traitement de surface choisi dans le groupe constitué par un un agent de couplage au silane ayant un groupe alkyle ayant 10 à 22 atomes de carbone et α-butyl-ω-(2-triméthoxysilyléthyl)polydiméthylsiloxane.

**2.** Composition thermoconductrice selon la revendication 1, dans laquelle les particules de nitrure d'aluminium (B-2) sont des particules de nitrure d'aluminium angulaires brisées non frittées.

**3.** Composition thermoconductrice selon la revendication 1 ou 2, dans laquelle l'oxyde métallique (B-3) autre que l'oxyde de zinc est l'alumine.

**4.** Composition thermoconductrice selon l'une quelconque des revendications 1 à 3, dans laquelle au moins un type de particules de nitrure d'aluminium choisi dans le groupe constitué par les particules de nitrure d'aluminium (B-1) et les particules de nitrure d'aluminium (B-2) a un revêtement d'oxyde contenant du silicium sur une surface de celui-ci.

**5.** Composition thermoconductrice selon l'une quelconque des revendications 1 à 4, dans laquelle la résine de silicone durcissable (A) est une résine de silicone durcissable par réaction d'addition.

**6.** Composition thermoconductrice selon la revendication 5, dans laquelle la résine de silicone durcissable par réaction d'addition est constituée d'un organopolysiloxane (a-1) ayant un groupe alcényle, d'un organopolysiloxane (a-2) ayant un groupe hydrosilyle et d'un catalyseur de durcissement à base de métal du groupe du platine (a-3).

**7.** Composition thermoconductrice selon l'une quelconque des revendications 1 à 6, comprenant en outre une huile de diméthyl silicone (C).

**8.** Composition thermoconductrice selon l'une quelconque des revendications 1 à 7, dans laquelle la composition thermoconductrice a une viscosité à 25°C inférieure ou égale à 50 000 Pa·s, dans laquelle la viscosité est mesurée par une méthode conforme à la norme JIS K7210:2014.

**9.** Produit durci de la composition thermoconductrice selon l'une quelconque des revendications 1 à 8.

**10.** Produit durci de la composition thermoconductrice selon la revendication 9, dans lequel le produit durci a une conductivité thermique supérieure ou égale à 10,0 W/m·K, la conductivité thermique étant mesurée par une méthode conforme à la norme ISO 22007-2.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020262449 A
- JP 2017210518 A
- WO 2018016566 A
- JP 2020090584 A
- WO 2021109051 A
- EP 3805317 A
- EP 0823451 A
- US 3220972 B
- US 3159601 B
- US 3159662 B
- US 3775452 B